# EUROPEAN PATENT APPLICATION

(11) **EP 3 764 701 A1**
(43) Date of publication of application: **13.01.2021**
(21) Application number: 19186108.7
(22) Date of filing: 12.07.2019
(51) Int. Cl.: H04W 52/02

(54) **USER EQUIPMENT INVOLVED IN MONITORING THE DOWNLINK CONTROL CHANNEL**

(71) Applicant: Panasonic Intellectual Property Corporation of America, Torrance, CA 90503 (US)
(72) Inventor: TAO, Ming-Hung, 63225 Langen (DE); SUZUKI, Hidetoshi, Osaka 540-6207 (JP); SHAH, Rikin, 63225 Langen (DE); LI, Hongchao, 63225 Langen (DE)
(74) Representative: Grünecker Patent- und Rechtsanwälte PartG mbB

(57) **Abstract**

The present disclosure relates to a user equipment (UE) that comprises processing circuitry that operates a discontinued reception function that involves monitoring of a downlink control channel for downlink control information intended to the UE during recurring monitoring time periods. A receiver of the UE receives a power-saving signal. The processing circuitry determines based on the power-saving signal whether or not to monitor the downlink control channel during one or more of the monitoring time periods of the discontinued reception function subsequent to the reception of the power-saving signal. The power-saving signal includes notification information on whether or not the UE is to acquire further information relating to one or more other functions operated by the UE.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing improved procedures for facilitating to save UE power, including procedures involving monitoring of a downlink control channel.

In an embodiment, the techniques disclosed here feature a user equipment comprising processing circuitry, which in operation, operates a discontinued reception function that involves monitoring of a downlink control channel for downlink control information intended to the UE during recurring monitoring time periods. The user equipment further comprises a receiver, which in operation, receives a power-saving signal. The processing circuitry, when in operation, determines based on the power-saving signal whether or not to monitor the downlink control channel during one or more of the monitoring time periods of the discontinued reception function subsequent to the reception of the power-saving signal. The power-saving signal includes notification information on whether or not the UE is to acquire further information relating to one or more other functions operated by the UE.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig.** 1: shows an exemplary architecture for a 3GPP NR system;
- **Fig. 2**: shows an exemplary user and control plane architecture for the LTE eNB, gNB, and UE,
- **Fig. 3**: is a schematic drawing which shows a functional split between NG-RAN and 5GC,
- **Fig. 4**: is a sequence diagram for RRC connection setup/reconfiguration procedures,
- **Fig. 5**: is a schematic drawing showing usage scenarios of Enhanced mobile broadband (eMBB), Massive Machine Type Communications (mMTC) and Ultra Reliable and Low Latency Communications (URLLC),
- **Fig. 6**: is a block diagram showing an exemplary 5G system architecture for a non-roaming scenario,
- **Fig. 7**: illustrates the DRX operation of a mobile terminal, and in particular the DRX opportunity and on-duration periods, according to a short and long DRX cycle,
- **Fig. 8**: illustrates an exemplary implementation of the wake-up signal and its effect on the DRX operation and PDCCH monitoring operation at the UE,
- **Fig. 9**: illustrates a problematic scenario with a UE having to wake up additionally to monitor a paging occasion for the SI update or PWS notification,
- **Fig. 10**: illustrates the exemplary and simplified structure of a UE and a gNB;
- **Fig. 11**: illustrates a structure of the UE according to an exemplary implementation of an improved downlink control channel monitoring procedure;
- **Fig. 12**: illustrates various functions to be operated in a UE, and the involved parallel operation of downlink control channel monitoring;
- **Fig. 13**: is a flow diagram for the behavior of a UE, according to an exemplary implementation for an improved solution,
- **Fig. 14**: is a flow diagram for the behavior of a gNB, according to an exemplary implementation for an improved solution,
- **Fig. 15**: illustrates the reception of extended power-saving signals and the advantage of not waking up for a paging occasion, in line with an improved solution,
- **Fig. 16A and B**: illustrates different structures of an extended power-saving signal according to the improved solution,
- **Fig. 17A-D**: illustrate different format of the notification information to be added to the wake-up signal to form the extended power-saving signal,
- **Fig. 18 and 19**: illustrate different DRX cycle lengths and the corresponding number of transmissions of the extended power-saving signal,
- **Fig 20**: illustrates a variant of the improved solution, according to which only the first wake-up signal in a SI modification period is extended with the notification information,
- **Fig. 21**: illustrates how the first wake-up signal in a SI modification period is extended for three UEs,
- **Fig. 22**: is a flow diagram for the behavior of a UE, according to an exemplary implementation for an improved solution,
- **Fig. 23**: is a flow diagram for the behavior of a gNB, according to an exemplary implementation for an improved solution,
- **Fig. 24**: is a flow diagram for the behavior of a UE, according to an exemplary implementation for an improved solution,
- **Fig. 25**: is a flow diagram for the behavior of a gNB, according to an exemplary implementation for an improved solution,
- **Fig. 26**: is a flow diagram for the behavior of a UE, according to an exemplary implementation for another, second, improved solution, and
- **Fig. 27 and 28**: illustrate the sequence of active times for a UE at different scenarios when using the second improved solution.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

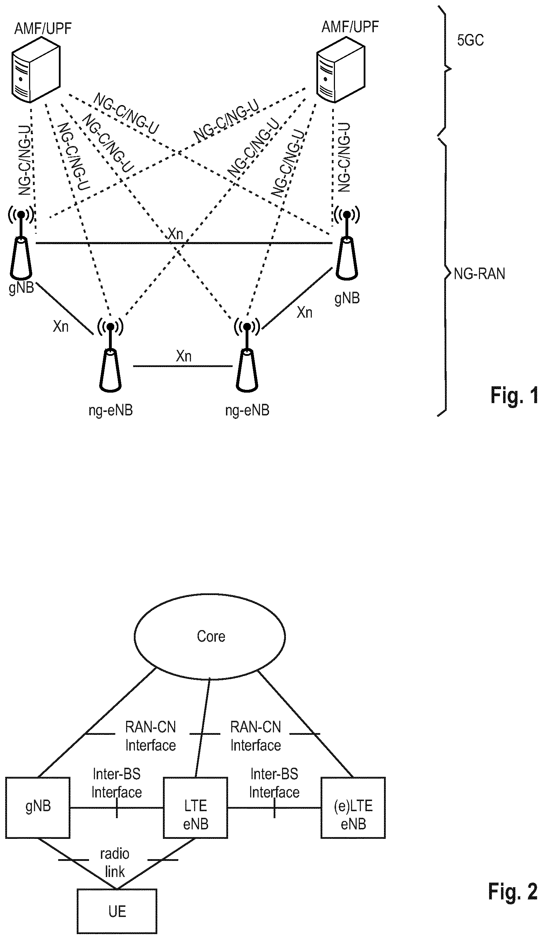

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

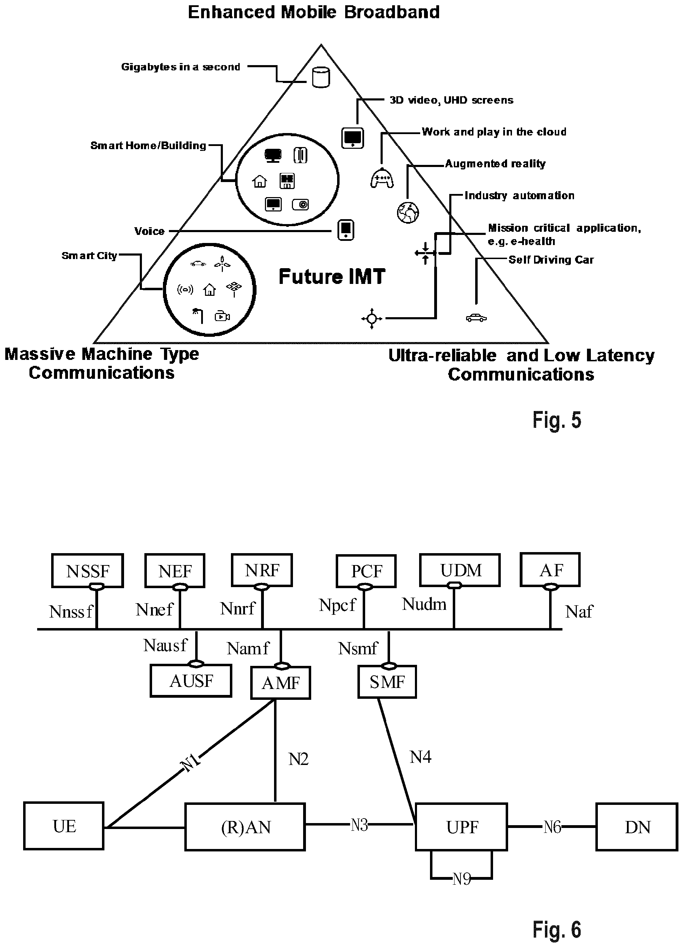

Various different deployment scenarios can be supported (see e.g. 3GPP TR 38.801 v14.0.0). For instance, a non-centralized deployment scenario (see e.g. section 5.2 of TR 38.801; a centralized deployment is illustrated in section 5.4) is presented therein, where base stations supporting the 5G NR can be deployed. **Fig. 2** illustrates an exemplary non-centralized deployment scenario (see e.g. Figure 5.2.-1 of said TR 38.801), while additionally illustrating an LTE eNB as well as a user equipment (UE) that is connected to both a gNB and an LTE eNB. The new eNB for NR 5G may be exemplarily called gNB. An eLTE eNB is the evolution of an eNB that supports connectivity to the EPC (Evolved Packet Core) and the NGC (Next Generation Core).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. One physical channel is the PRACH (Physical Random Access Channel) used for the random access.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### 5G NR functional split between NG-RAN and 5GC

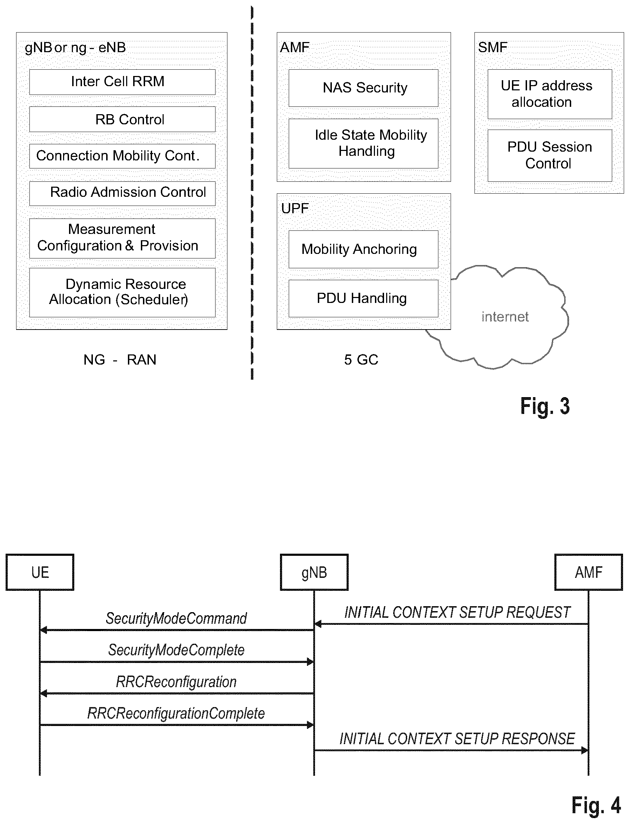

**Fig. 3** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 4** illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 5** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 5 illustrates some examples of envisioned usage scenarios for IMT for 2020 and beyond.

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From RAN1 perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLCC in Rel. 15 include Augmented Reality/Virtual Reality (AR/VR), e-health, e-safety, and mission-critical applications.

Moreover, technology enhancements targeted by NR URLCC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLCC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from RAN1 perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 4. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 6** illustrates a 5G NR non-roaming reference architecture (see TS 23.501 v16.1.0, section 4.23). An Application Function (AF), e.g. an external application server hosting 5G services, exemplarily described in Fig. 5, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 6 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services.

### Downlink control channel monitoring, PDCCH, DCI

Many of the functions operated by the UE involve the monitoring of a downlink control channel (e.g. the PDCCH, see 3GP TS 38.300 v15.6.0, section 5.2.3) to receive e.g. particular control information or data destined to the UE.

A non-exhaustive list of these functions is given in the following:
- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

The present description will focus on the above list of functions. However, the concepts and aspects for improving the PDCCH monitoring described herein may also be applicable to other functions that involve PDCCH monitoring.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power. Correspondingly, a timer may be started when the UE starts the PDCCH monitoring for the intended purpose. Then, when the timer expires, the UE may stop the PDCCH monitoring for the intended purpose, and has the opportunity to save power.

The above listed functions will be described respectively in more detail in the following.

### Paging Procedures in 5G NR

An exemplary implementation of the paging function in 5G NR that involves PDCCH monitoring, according to the currently standardized version, will be explained in a simplified and abbreviated form in the following.

There are two different paging procedures in 5G NR, a RAN-based paging procedure (e.g. based on RAN-based notification areas) and a core-network-based paging procedure (see for instance 3GPP TS 38.300 v15.6.0, TS 38.304 v15.4.0, and TS 38.331 v15.6.0 referring to RAN paging and CN paging in several sections thereof, such as section 9.2.5 "Paging" in TS 38.300).

Paging allows the network to reach UEs in RRC_IDLE and RRC_INACTIVE state through Paging messages, and to notify UEs in RRC_IDLE, RRC_INACTIVE, and RRC_CONNECTED state of system information change and public warning information (such as ETWS/CMAS, Earthquake and Tsunami Warning System/ Commercial Mobile Alert System) indications through Short Messages. Both the paging messages and the Short Messages are addressed with P-RNTI on the PDCCH to be monitored by the UE. But while the actual paging messages (e.g. with the paging records) are then sent on PCSCH (as indicated by the PDCCH), the Short Messages can be sent over PDCCH directly.

While in RRC_IDLE the UE monitors the paging channels for CN-initiated paging, in RRC_INACTIVE the UE also monitors paging channels for RAN-initiated paging. A UE need not monitor paging channels continuously though; Paging DRX is defined where the UE in RRC_IDLE or RRC_INACTIVE is only required to monitor paging channels during one Paging Occasion (PO) per DRX cycle (see 3GPP TS 38.304 v15.3.0, e.g. sections 6.1 and 7.1). The Paging DRX cycles are configured by the network.

The POs of a UE for CN-initiated and RAN-initiated paging are based on the same UE ID, resulting in overlapping POs for both. The number of POs in a paging frame (PF) is configurable via system information, and a network may distribute UEs to those POs based on their IDs. A PO is a set of PDCCH monitoring occasions and can consist of multiple time slots (e.g. subframe or OFDM symbol) where paging DCI can be sent. One PF is one Radio Frame and may contain one or multiple PO(s) or starting point of a PO.

When in RRC_CONNECTED, the UE monitors the paging channels in any PO signaled in system information for a System Information (SI) change indication and/or a PWS (Public Warning System) notification. In case of Bandwidth Adaptation (BA) (see section 6.10 in TS 38.300), a UE in RRC_CONNECTED only monitors paging channels on the active BWP with common search space configured.

When the UE receives a paging message, the PDCCH monitoring can be stopped by the UE. Depending on the paging cause, the UE may continue with e.g. obtaining system information, or establishing the RRC connection with the base station and then receiving the traffic/instruction from the network.

### NR System Information Acquisition

An exemplary implementation of the system information acquisition function in 5G NR that involves PDCCH monitoring, already mentioned briefly above, according to the currently standardized version, will be explained in a simplified and abbreviated form in the following.

In 5G NR, system information (SI) is divided into the MIB (Master Information Block) and a number of SIBs (System Information Blocks) (see 3GPP TS 38.331 v15.6.0 e.g. section 5.2, see also 3GPP TS 38.300 v15.6.0 e.g. section 7.3, and also 3GPP TS 38.213 v15.6.0 e.g. section 13). The *MIB* is transmitted on the BCH and includes parameters that are needed to acquire the SIB1 from the cell. The SIB1 is periodically transmitted on the DL-SCH and includes information regarding the availability and scheduling, e.g. mapping of SIBs to SI messages, periodicity, Sl-window size of other SIBs with an indication whether one or more SIBs are only provided on demand, and in that case, the configuration needed by the UE to perform the SI request.

SIBs other than SIB1 are carried in System Information messages (SI messages), which are transmitted on the DL-SCH. SIBs having the same periodicity can be mapped to the same SI message. Each SI message is transmitted within periodically occurring time-domain windows (referred to as Sl-windows with the same length for all SI messages). Each SI message is associated with an Sl-window, and the Sl-windows of different SI messages do not overlap.

The UE applies the SI acquisition procedure to acquire the information of the Access Stratum (AS) and Non-Access stratum (NAS), and applies to UEs in RRC_IDLE, in RRC_INACTIVE, and in RRC_CONNECTED modes. For instance, the UE may apply the SI acquisition procedure upon cell selection (e.g. upon power-on), cell-reselection, return from out of coverage, after reconfiguration with sync completion, after entering the network from another RAT (Radio Access Technology), upon receiving an indication that the system information has changed (SI change indication), and when the UE does not have a valid version of a stored SIB. A modification period is used, i.e. updated SI is broadcast in the modification period following the one where the SI change indication is transmitted. The modification period can be defined by multiplying the default paging cycle (e.g. 230/640/1280/2560ms) with a corresponding coefficient (modificationPeriodCoeff: 2/4/8/16), modification period = defaultPagingCycle x modificationPeriodCoeff.

The UE receives indications about the SI modifications in a Short Message transmitted with the P-RNTI over DCI, e.g. as defined in TS 38.331:

**Table 6.5-1: Short Messages**

| **Bit** | **Short Message** |
|---|---|
| 1 | ***systemInfoModification*** |
| | If set to 1: indication of a BCCH modification other than SIB6, SIB7 and SIB8. |
| 2 | ***etwsAndCmasIndication*** |
| | If set to 1: indication of an ETWS primary notification and/or an ETWS secondary notification and/or a CMAS notification. |
| 3-8 | Not used in this release of the specification, and shall be ignored by UE if received. |

UEs in RRC_IDLE or in RRC_INACTIVE may monitor for an SI change indication in its own paging occasion every DRX cycle (see TS 38.331 section 5.2.2.2.2). UEs in RRC_CONNECTED shall monitor for an SI change indication in any paging occasion at least once per modification period if the UE is provided with common search space on the active BWP to monitor paging.

For SI message acquisition one or more PDCCH monitoring occasions are determined, which can be the same or different than for PDCCH monitoring of SIB1. For instance, the UE assumes that, in the SI window, PDCCH for an SI message is transmitted in at least one PDCCH monitoring occasion corresponding to each transmitted SSB (Synchronization Signal Block). The SIB1 configuration provides information about the search space and other PDCCH-related parameters that a UE needs in order to monitor for scheduling of the SIB1.

To summarize the above within the context of the improved concepts and aspects for the PDCCH monitoring as will be explained later, the system information acquisition function involves that the RRC_CONNECTED UE monitors the PDCCH (e.g. during any one of the paging occasions) to be able to detect a SI change indication and to subsequently receive the updated system information in the next modification period.

### Public Warning System PWS

There is an interest to ensure that the public has the capability to receive timely and accurate alerts, warnings and critical information regarding disasters and other emergencies irrespective of what communications technologies they use. As has been learned from disasters such as earthquakes, tsunamis, hurricanes and wild fires, such a capability is essential to enable the public to take appropriate action to protect their families and themselves from serious injury, or loss of life or property.

This interest to enhance the reliability, resiliency, and security of Warning Notifications to the public by providing a mechanism to distribute Warning Notifications over 3GPP systems is the impetus for establishing a Public Warning System, e.g. according to the 3GPP Technical Specification 22.268 v16.3.0.

The Public Warning System distinguishes between the ETWS (Earthquake and Tsunami Warning System) and the CMAS (Commercial Mobile Alert System; can also be termed Wireless Emergency Alert.

According to the Earthquake and Tsunami Warning System, the Public Warning System delivers *Warning Notifications* specific to Earthquake and Tsunami provided by *Warning Notification Providers* to the UEs which have the capability of receiving Primary and Secondary *Warning Notifications* within *Notification Areas* through the 3GPP network

According to the Commercial Mobile Alert System, the Public Warning System delivers *Warning Notifications* provided by *Warning Notification Providers* to CMAS capable PWS-UEs. CMAS defines the following classes of Warning Notifications: Presidential, Imminent Threat, Public Safety, Child Abduction Emergency, and State/Local WEATest.

A User Equipment (UE) that has the capability of receiving Warning Notifications within Notification Areas through the 3GPP network and conforms to the behavior specific to the PWS service such as dedicated alerting indication and display of the Warning Notification upon reception can be termed PWS-UE. There is also enhancements to the PWS system, known under the term ePWS. In the following, it is assumed that the UE supports the PWS and/or the ePWS (even if a UE is not specifically mentioned as a PWS-UE or ePWS-UE).

The PWS is able to broadcast Warning Notifications to multiple users simultaneously with no acknowledgement required.

One of the key requirements for the PWS (e.g. regarding ETWS) is that the warning is delivered quickly to the users. ETWS distinguishes between a Primary Notification, which is small enough to be sent quickly on the network while still indicating enough information on the warning, such as the imminent occurrence of an earthquake or tsunami. The primary notification shall be delivered within 4 seconds to the UE. On the other hand, a secondary notification is able to convey a large amount of data (e.g. text, audio to instruct what to do, graphical data such as a map) and need not be delivered as quickly as the first notification.

The UE receives PWS notifications in a Short Message transmitted with the P-RNTI (Paging RNTI) over the DCI, as described in TS 38.331 section 5.2.2.2.2. ETWS or CMAS capable UEs in RRC_IDLE or in RRC_INACTIVE shall monitor for indications about PWS notification in its own paging occasion every DRX cycle. ETWS or CMAS capable UEs in RRC_CONNECTED shall monitor for indication about PWS notification in any paging occasion at least once every *defaultPagingCycle* if the UE is provided with common search space on the active BWP to monitor paging.

If the UE receives a PWS notification (e.g. the etwsAndCmaslndication bit of the Short Message, see above, is set to 1), the UE should immediately acquire the Public Warning message. Acquiring the Public Warning message may involve immediately receiving the corresponding system information that includes the Public Warning message, e.g. the Primary and/or Secondary notifications regarding the ETWS mentioned above.

For instance, after the UE receives the PWS notification, the UE immediately acquires SIB1, and one or more of SIB6, SIB7 and SIB8 (see TS 38.331 v 15.6.0 section 5.2.2.2.2). The SIB6 contains the ETWS primary notification, SIB7 contains an ETWS secondary notification, SIB8 contains a CMAS notification (see TS 38.331 v15.6.0 section 6.3.1)

### Discontinued Reception, DRX, in LTE and 5G NR

An exemplary implementation of the discontinued reception (DRX) function in 5G NR that involves PDCCH monitoring, according to the currently standardized version, will be explained in a simplified and abbreviated form in the following.

To reduce the battery consumption in the UE, a mechanism to minimize the time the UE spends monitoring the PDCCH is used, which is called the Discontinuous Reception (DRX) functionality. DRX functionality can be configured for RRC_IDLE, in which case the UE uses either the specific or default DRX value (defaultPagingCycle); the default paging cycle is broadcasted in the System Information and can have values of 32, 64, 128 and 256 radio frames. The UE needs to wake up for one paging occasion per DRX cycle, the paging occasion being one subframe. DRX functionality can be also configured for an "RRC_CONNECTED" UE, so that it does not always need to monitor the downlink control channels for downlink control information (or phrased simply: the UE monitors the PDCCH) (see 3GPP Technical Standard TS 36.321, 15.6.0, chapter 5.7).

The following parameters are available to define the DRX UE behavior; e.g. the On-Duration periods at which the mobile node is active (i.e. in DRX Active Time), and the periods where the mobile node is in DRX (i.e. not in DRX Active Time).
- On-duration: duration in downlink subframes, i.e. more in particular in subframes with PDCCH (also referred to as PDCCH subframe), that the user equipment, after waking up from DRX, receives and monitors the PDCCH. It should be noted here that the term "PDCCH" refers to the PDCCH, EPDCCH (in subframes when configured) or, for a relay node with R-PDCCH configured and not suspended, to the R-PDCCH. If the user equipment successfully decodes a PDCCH, the user equipment stays awake/active and starts the inactivity timer; [1-200 subframes; 16 steps: 1-6, 10-60, 80, 100, 200]
- DRX inactivity timer: duration in downlink subframes that the user equipment waits to successfully decode a PDCCH, from the last successful decoding of a PDCCH; when the UE fails to decode a PDCCH during this period, it re-enters DRX. The user equipment shall restart the inactivity timer following a single successful decoding of a PDCCH for a first transmission only (i.e. not for retransmissions). [1-2560 subframes; 22 steps, 10 spares: 1-6, 8, 10-60, 80, 100-300, 500, 750, 1280, 1920, 2560]
- DRX Retransmission timer: specifies the number of consecutive PDCCH subframes where a downlink retransmission is expected by the UE after the first available retransmission time. [1-33 subframes, 8 steps: 1, 2, 4, 6, 8, 16, 24, 33]
- DRX short cycle: specifies the periodic repetition of the on-duration followed by a possible period of inactivity for the short DRX cycle. This parameter is optional. [2-640 subframes; 16 steps: 2, 5, 8, 10, 16, 20, 32, 40, 64, 80, 128, 160, 256, 320, 512, 640]
- DRX short cycle timer: specifies the number of consecutive subframes the UE follows the short DRX cycle after the DRX Inactivity Timer has expired. This parameter is optional. [1-16 subframes]
- Long DRX Cycle Start offset: specifies the periodic repetition of the on-duration followed by a possible period of inactivity for the DRX long cycle as well as an offset in subframes when on-duration starts (determined by formula defined in TS 36.321 section 5.7); [cycle length 10-2560 subframes; 16 steps: 10, 20, 30, 32, 40, 64, 80, 128, 160, 256, 320, 512, 640, 1024, 1280, 2048, 2560; offset is an integer between [0 - subframe length of chosen cycle]]

The total duration that the UE is awake is called "Active time" or DRX Active Time. The Active Time e.g. includes the on-duration of the DRX cycle, the time UE is performing continuous reception while the inactivity timer has not expired and the time UE is performing continuous reception while waiting for a downlink retransmission after one HARQ RTT. Similarly, for the uplink the UE is awake (i.e. in DRX Active Time) at subframes where uplink retransmission grants can be received over the PDCCH, i.e. every 8ms after an initial uplink transmission until the maximum number of retransmissions is reached. Based on the above, the minimum Active Time is of fixed length equal to on-duration, and the maximum is variable depending on e.g. the PDCCH activity.

The "DRX period" or "DRX off period" is the duration of downlink subframes during which a UE can skip reception of downlink channels for battery saving purposes, i.e. is not required to monitor the downlink channels. The operation of DRX gives the mobile terminal the opportunity to deactivate the radio circuits repeatedly (according to the currently active DRX cycle) in order to save power. Whether the UE indeed remains in DRX (i.e. is not active) during the DRX period may be decided by the UE; for example, the UE usually performs inter-frequency measurements which cannot be conducted during the On-Duration, and thus need to be performed at some other time, e.g. during the DRX off time.

To meet conflicting requirements, two DRX cycles - a short cycle and a long cycle - can be configured for each UE; the short DRX cycle is optional, i.e. only the long DRX cycle could be used. The transition between the short DRX cycle, the long DRX cycle and continuous reception is controlled either by a timer or by explicit commands from the eNodeB. In some sense, the short DRX cycle can be considered as a confirmation period in case a late packet arrives, before the UE enters the long DRX cycle. If data arrives at the eNodeB while the UE is in the short DRX cycle, the data is scheduled for transmission at the next on-duration time, and the UE then resumes continuous reception. On the other hand, if no data arrives at the eNodeB during the short DRX cycle, the UE enters the long DRX cycle, assuming that the packet activity is finished for the time being.

During the Active Time, the UE monitors the PDCCH, reports SRS (Sounding Reference Signal) as configured and reports CQI (Channel Quality Information)/PMI (Precoding Matrix Indicator)/RI (Rank Indicator)/PTI (Precoder Type Indication) on PUCCH. When UE is not in Active time, type-0-triggered SRS and CQI/PMI/RI/PTI on PUCCH may not be reported. If CQI masking is set up for the UE, the reporting of CQI/PMI/RI/PTI on PUCCH is limited to the On-Duration subframes.

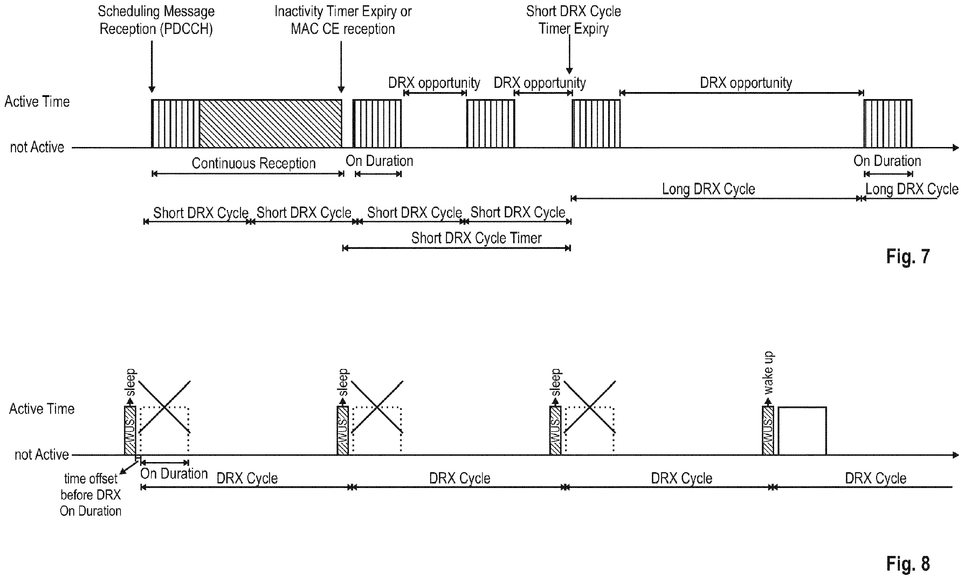

**Fig. 7** discloses an example of a DRX operation. The UE checks for scheduling messages (can also be termed downlink/uplink assignment; e.g. indicated by its C-RNTI, cell radio network temporary identity, on the PDCCH) during the "on-duration" period, which is the same for the long DRX cycle and the short DRX cycle. When a scheduling message is received during an "on-duration period", the UE starts an "inactivity timer" and keeps monitoring the PDCCH in every subframe while the Inactivity Timer is running. During this period, the UE can be regarded as being in a "continuous reception mode". Whenever a scheduling message is received while the Inactivity Timer is running, the UE restarts the Inactivity Timer, and when it expires the UE moves into a short DRX cycle and starts a "short DRX cycle timer" (assuming a short DRX cycle is configured). When the short DRX cycle timer expires, the UE moves into a long DRX cycle. The short DRX cycle may also be initiated by means of a DRX MAC Control Element, which the eNB can send at any time to put the UE immediately into a DRX cycle, i.e. the short DRX cycle (if so configured) or long DRX cycle (in case the short DRX cycle is not configured).

The basic concepts for DRX as explained above for LTE also apply to the new 5G NR, with some differences. The standardization has progressed and defined DRX (see 3GPP TS 38.321 v15.6.0 section 5.7 titled "Discontinuous Reception (DRX)").

It should be noted that the term PDCCH may for instance refer to the PDCCH with common search space, or the PDCCH with the UE-specific search space, or even the GC-PDCCH (Group Common PDCCH) in the 5G NR. Therefore, conceptually the 5G-NR DRX mechanism works as illustrated in **Fig. 7****.**

To summarize the above within the context of the improved concepts and aspects for the PDCCH monitoring as will be explained later, the UE monitors the PDCCH using timers to respectively control the On-Duration time as well as the DRX-inactivity time. While the corresponding timers are running, the UE is required to continue monitoring the PDCCH for the DRX operation.

### Power-Saving enhancements - Wake-Up signal

It is critical to study UE power consumption to ensure that UE power efficiency for 5G NR UEs can be better than that of LTE, and that techniques and designs for improvements are identified and adopted in said respect. 3GPP is currently studying how to save UE power taking into considerations latency and performance in the NR system. For instance, a power saving signal/channel/procedure is used for triggering adaptation of the UE power consumption characteristics.

Among other things, it is studied how to improve the DRX operation. A power saving signal/channel may trigger the UE adaptation to DRX operation and involves to configure the power saving signal/channel (can also be termed wake-up signal) before or at the beginning of the DRX ON duration to trigger the UE to only wake up when there is DL data arrival. UE is not required to wake up at the DRX ON duration at least for PDCCH monitoring, if the power saving signal (wake-up signal) is not detected. Optionally, there can be a go-to-sleep signaling used as the indication for allowing the UE to go back to the sleep state after completion of the PDSCH reception during the DRX ON period to further reduce the UE power consumption.

The UE power consumption can be reduced when the number of UE PDCCH monitoring occasions and/or the number of PDCCH blind decoding attempts is reduced. This may be facilitated by using the above-mentioned Wake-Up signal to trigger/skip the PDCCH monitoring.

Some preliminary agreements may have been reached at 3GPP, which, although not mandatory, can be exemplary assumed for the sake of further explanations. For instance, if the UE is configured with the wake-up signal (e.g. WUS), the UE may monitor the downlink control channel (PDCCH) for the WUS at a known time offset before the On-Duration period of the DRX cycle; there is no agreement yet on the exact amount of the time offset.

Apart from indicating whether or not to monitor the PDCCH during the next DRX On-Duration(s), there are - at least at present - no other relevant impacts on the DRX procedure.

Other aspects of the Wake-Up signal are still under discussion. For instance, the Wake-Up signal is used to indicate to the UE whether to wake up or not to monitor the PDCCH during the subsequent DRX On-Duration. However, it is still discussed whether the Wake-Up signal instruction (be it to monitor or be it not to monitor) is to be applied by the UE to the next DRX On-Duration only or to multiple subsequent DRX On-Durations. For sake of simplicity however, and if not mentioned differently, it is exemplarily assumed for the following that the Wake-Up signal provides an indication for the next DRX On-Duration only (e.g. the one On-Duration time period following the Wake-Up signal), such that the Wake-Up signal might need to be monitored by the UE for every DRX cycle (respectively before the On-Duration period, as mentioned above).

Further, the exact structure of the Wake-up signal is also not agreed upon. Moreover, it is neither agreed whether the wake-up signal is implemented in a way such that its presence/absence is already taken as an implicit instruction for the UE on whether to monitor or not the PDCCH during the subsequent DRX On-Duration(s), or in a way such that the wake-up signal is transmitted in any case but the content of the wake-up signal (e.g. one or more bits therein) provide an explicit instruction for the UE on whether to monitor or not the PDCCH during the subsequent DRX On-Duration(s). For the sake of simplicity however, and if not mentioned differently, it is exemplarily assumed for the following that the content of the Wake-Up signal provides an explicit indication on the UE behavior for the next DRX On-Duration.

**Fig. 8** illustrates an exemplary implementation of the wake-up signal and its effect on the DRX operation and the PDCCH monitoring operation at the UE, taking some of the above exemplary assumptions into account. As apparent therefrom, the UE monitors the PDCCH to acquire the Wake-up signal at the appropriate timing (see illustrated "time offset") before the configured On-Duration time period of the DRX function at every DRX cycle. Depending on what the Wake-up signal indicates ("sleep" or "wake up"), the UE then follows the indication either to continue sleeping and thus not monitor the PDCCH during the next On-Duration (WUS illustrated to indicate "sleep" and the On-Duration being illustrated as dotted and crossed out) in case the WUS indicates to not monitor the On-Duration, or to wake up and thus monitor the PDCCH during the next On-Duration (WUS illustrated to "wake up" and the On-Duration illustrated with a full line and not crossed out).

As mentioned above, power saving is critical to UE requirements in the future. The wake-up signal is one way on how to facilitate reducing the number of times the UE needs to wake-up to monitor the PDCCH during the DRX On-Durations.

However, the inventors have identified further instances where the UE consumes power that should be best avoided, independent from the DRX operation and PDCCH monitoring according to the DRX operation. As mentioned above, the UE operates the system information acquisition function that involves the UE monitoring for system information updates, and - if any - involves the UE acquiring the updated system information. Further, the UE operates the public warning system function that involves the UE monitoring for public warning notifications and - if any - involves the UE acquiring the actual public warning message.

In particular, according to particular exemplary implementations (based on current 3GPP standardization), the UE (in RRC_CONNECTED) is required to monitor for a system information change indication in any paging occasion at least once per modification period. Similarly, the UE (in RRC CONNECTED) is required to monitor for the PWS notification in any paging occasion at least once every default paging cycle (see TS 38.331). In the particular exemplary implementation the SI change notification and the PWS notification are usually transmitted together in a Short Message (illustrated above).

It should be noted that it is up to the particular UE implementation (e.g. by the UE or chip manufacturer) at which time (during the modification period respectively default paging cycle) the UE has to wake up and monitor a paging occasion for a SI change notification respectively PWS notification, to fulfil the requirements provided by the 3GPP standardization mentioned above.

The modification period can be from 720 ms (320ms x 2) as the minimum up to 40960 ms (2560ms x 16) as the maximum. The default paging cycle can be from 320 ms as the minimum up to 2560 ms as the maximum.

Consequently, even if the UE is configured with the Wake-up signal (e.g. this could be done assuming that the UE only has sporadic traffic and most of the time, the WUS indicates the UE does not have to wake up for the DRX On-Duration) and even if the Wake-up signal indicates that the UE does not need to wake up during the next DRX On-Duration of the DRX cycle, a UE still needs to wake up additionally at appropriate paging occasions to check whether there is any SI change notification and/or any PWS notification.

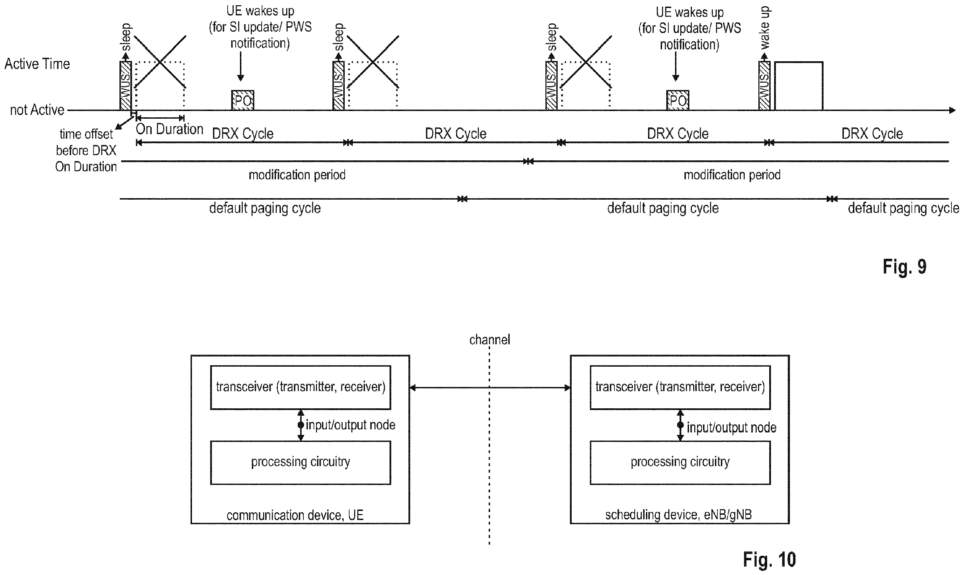

This is exemplarily illustrated in a simplified manner in **Fig. 9****,** which is similar to Fig. 8 and illustrates the additional times (i.e. paging occasions) where the UE has to wake up to monitor for the possible SI update and/or the PWS notification. To facilitate and simplify the illustration, other paging occasions not used by the UE to monitor the downlink control channel have been omitted from Fig. 9. As apparent in Fig. 9, the modification period as well as the default paging cycle are operated by the UE in parallel to (and independent of) the DRX function (and its DRX cycle with On and Off Durations). In order to comply with the requirements to acquire the SI change notification in any paging occasion at least once per modification period and to acquire the PWS notification in any paging occasion at least once per default paging cycle, exemplarily, the UE needs to wake up and monitor the paging occasions as illustrated in Fig. 9. The UE thus consumes additional power, the amount of which depends on the length of the default paging cycle (for the PWS notification) and the length of the modification period (for the SI update notification). The shorter the lengths, the more often the UE needs to wake up and the more power will be consumed.

Consequently, the inventors have identified the possibility to improve the monitoring of the downlink control channel (e.g. PDCCH) so as facilitate avoiding one or more of the above-discussed disadvantages. For instance, this can involve improving how the PDCCH monitoring is performed as part of the system information acquisition function and/or improving how the PDCCH monitoring is performed as part of the public warning system function.

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **"recurring monitoring time periods"** used in the claims and description is to be understood broadly as referring to a time period during which monitoring (of a downlink control channel) can be performed and that occurs periodically.

The term **"power-saving signal"** used in the claims and description is to be understood broadly as referring to a signal or message that is transmitted for facilitating the purpose of saving power primarily at the UE side and that - to said end - is processed by the UE accordingly. The wake-up signal is thus a power saving signal. The power saving signal may further include notification information.

The term **"function"** used in the claims and the description is to be understood broadly as referring to a process that is performed (operated), e.g. by the UE (the base station may also participate) and that may involve further functions or steps (e.g. the monitoring of the downlink control channel and the transmission/reception of modifications and information). Example functions are the discontinued reception function, the system information acquisition function, or the public warning system function.

**Fig. 10** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

### First embodiment

An improved procedure on how to handle the monitoring of the downlink control channel according to one or more functions operated at the UE will be described in the following.

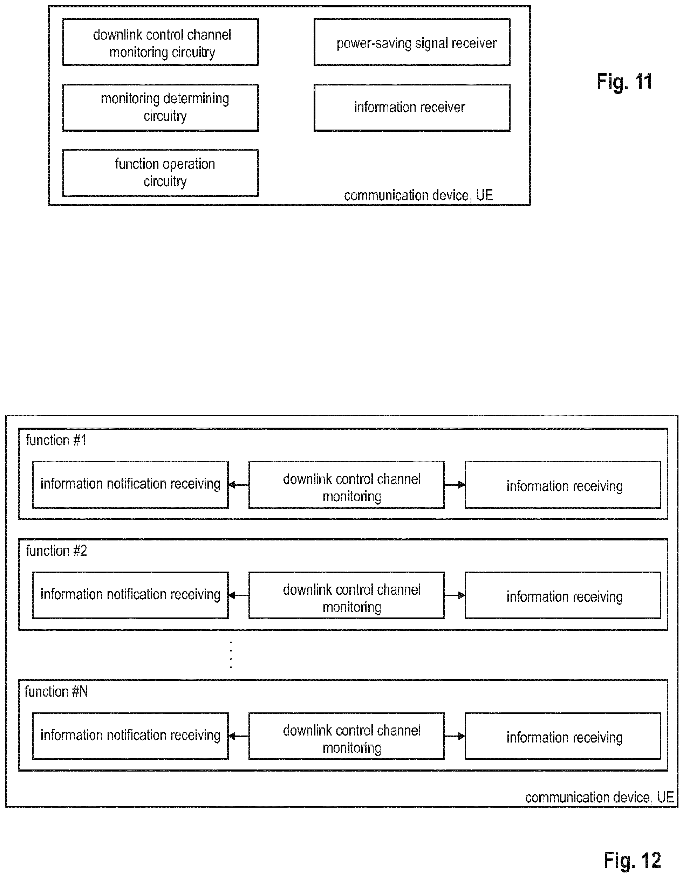

**Fig. 11** illustrates a simplified and exemplary UE structure according to one solution of the improved procedure, and can be implemented based on the general UE structure explained in connection with Fig. 10. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent from Fig. 11, the UE may include downlink control channel monitoring circuitry, a power-saving signal receiver, monitoring determining circuitry, an information receiver, and function operation circuitry.

In the present case as will become apparent from the below disclosure, the processing circuitry can thus be exemplarily configured to at least partly perform one or more of operating a discontinued reception function, of determining whether or not to monitor the downlink control channel, of determining whether or not to acquire the further information relating to other functions operated by the UE, and of operating other functions at the UE, etc.

The receiver can thus be exemplarily configured to at least partly perform one or more of receiving the power-saving signal and the notification information within the power-saving signal, of monitoring the downlink control channel, and of receiving the further information relating to other functions operated by the UE, etc.

**Fig. 12** is a schematic illustration of some functions #1 to #N that can be operated by the UE that will become relevant for explaining the improved procedures. Each of these functions involves that the UE has to monitor for and receive a notification relating to information to be received according to said function. In said respect, the UE is to monitor the downlink control channel and then to receive the corresponding function-specific information. Two examples of such functions have already been explained above, namely the system information acquisition function and the public warning system function. Although the underlying concepts and variants of the improved procedures will be mainly explained with regard to one or both of the above-noted example functions (SI acquisition and PWS), the underlying concepts and variants are not restricted in said respect but can be applied and extended to other functions too.

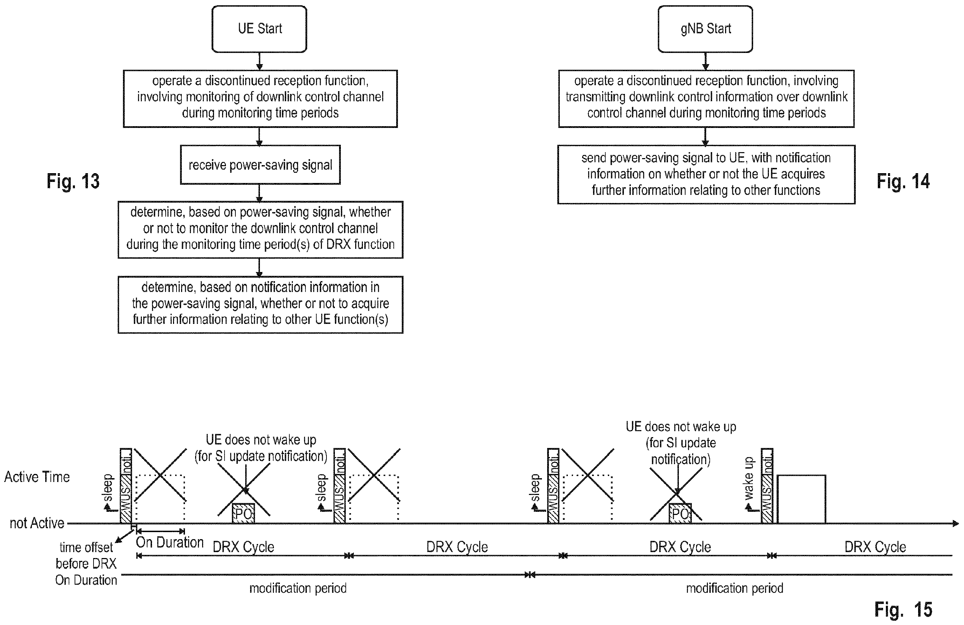

**Fig. 13** is a sequence diagram for an exemplary UE behavior according to the improved procedure, which will be described in more detail in the following.

It is assumed that a UE supports and operates a discontinued reception (DRX) function together with the base station to which it is connected. This already involves that the downlink control channel, between the UE and the base station, is monitored by the UE for downlink control information that could be transmitted by the base station and that is destined to the UE. In said connection, the DRX function defines recurring monitoring time periods, during which the UE can monitor the downlink control channel.

It is further assumed that the UE operates one or more other functions that respectively involve acquiring further information relating to that function when being notified accordingly by the base station. For instance, these other functions require the UE to check at least once for each of particular function-related and recurring broadcast time periods whether this further information needs to be acquired or not. This checking can be done e.g. by the UE monitoring the downlink control channel for a suitable notification.

Examples of these functions have been mentioned above, e.g. the system information acquisition function or the public warning system function. Accordingly, a system information change notification is broadcast by the base station, in case the system information is updated. The UE in turn may monitor for this system information change notification at least once per modification period (as the broadcast time period), e.g. at one of the paging occasions used by the base station to broadcast the SI change notification (according to an exemplary implementation when following the current definitions in the 3GPP standards in said respect). The UE then acquires the updated system information during the next modification time period (subsequent to the modification time period during which the power-saving signal and the SI update notification, were received).

Similarly, the PWS notification is broadcast by the base station in case a public warning message is to be broadcast. The UE in turn may need to monitor for this PWS notification at least once per default paging cycle, e.g. at one of the paging occasions used by the base station to broadcast the PWS notifications (according to an exemplary implementation when following the current definitions in the 3GPP standards in said respect). The UE then acquires as soon as possible after receiving the power-saving signal and the PWS notification, the public warning message (e.g. in suitable SI occasions/window).

It is further assumed that the UE is generally configured for the use of a power-saving signal, such as the wake-up signal currently being discussed in 3GPP, to enhance the DRX operation by allowing to further decrease the UE power consumption. To summarize a relevant aspect of the wake-up signal described in more detail above, the wake-up signal is expected to be used by the base station to notify whether or not the UE shall monitor the downlink control channel during one or more of the subsequent monitoring time periods (e.g. On-Duration) of the DRX function. Thus, based on the wake-up signal, the UE will determine whether or not to monitor the downlink control channel during one or more of the monitoring time periods of the DRX function that are subsequent to the reception of the power-saving signal (see e.g. Fig. 8 and 9).

According to the improved UE operation, this wake-up signal is extended to also carry the relevant notification information on whether or not the UE is to acquire the further information relating to the other function(s) operated by the UE. This extended wake-up signal can also be exemplarily called (extended) power-saving signal. Alternatively, rather than being explicitly included in one power-saving signal message together with the wake-up signal, the relevant notification information could be transmitted together in some other form. In any case, the UE receives the power-saving signal with the notification information.

By using such an extended power-saving signal, the UE can determine whether or not to acquire the further information of other UE-operated functions already based on the power-saving signal, particularly based on the included notification information. The UE does not need to again receive the notification information during the respective broadcast period of the other function(s) and can skip the monitoring of the downlink control channel that it would have to perform otherwise for said purpose.

For instance, assuming that the other function is the system information acquisition function, the UE does not need to again receive the SI change notification in the modification period in which the UE just received the power-saving signal with the notification information (here the SI change notification). The UE can thus skip monitoring a paging occasion per modification period, compared to the prior art operation.

In case the SI change notification does not indicate a change of system information, the UE does not need to acquire the system information. On the other hand, in case the SI change notification does indicate a change of system information, the UE, in the subsequent/next modification period, acquires updated system information during the suitable system information acquisition occasions (e.g. SI windows). For instance, system information is broadcast by the base station using one or more monitoring occasions on the downlink control channel, PDCCH, and the actual system information can be broadcast on the downlink shared channel, as indicated by the resource information on the PDCCH.

**Fig. 14** is a sequence diagram for a base station (e.g. gNB) behavior for participating in the improved procedure as described above (e.g. with regard to Fig. 13). Accordingly, it is assumed that the base station supports and operates the DRX function already mentioned in connection with the UE above. Correspondingly, from the base station perspective this would involve transmitting downlink control information over the downlink control channel during the recurring monitoring time period defined for the DRX function.

Moreover, it is also assumed that the base station operates other functions that respectively involve broadcasting information relating to that function and also broadcasting in advance a corresponding notification about the actual information to be broadcast. As mentioned above with regard to Fig. 13, examples of these functions are e.g. the system information acquisition function or the public warning system function (details see above).

In addition, it is equally assumed that the base station supports the use of the power saving signal, such as the wake-up signal currently being discussed in 3GPP. In congruence with what was described with regard to Fig. 13 above, the base station sends the wake-up signal to the UE so as to instruct the UE on whether or not to monitor the downlink control channel during one or more of the subsequent monitoring time periods (e.g. On-Durations). According to the improved base station operation, the wake-up signal is extended to form a power-saving signal that also carries the relevant notification information on whether or not the UE is to acquire further information relating to the other function(s) operated by the base station (and the UE).

For instance, in case updated system information is available, a corresponding SI change notification is transmitted to the UE with the wake-up signal, as part of the power-saving signal. The updated system information is broadcast by the base station in its cell and may be acquired by the UE in the next SI modification period.

As was explained before, the improved procedure based on the power-saving signal and the included notification information may allow the UE to skip monitoring a paging occasion during the SI modification period. From the perspective of the base station, the base station may thus not need to broadcast the notification information in those paging occasions either. On the other hand, the base station may still broadcast the notification information in the paging occasions, because other UEs (e.g. those not receiving the notification information via the power-saving signal) may still need to acquire the notification information from these paging occasions.

**Fig. 15** illustrates the sequence of events in an exemplary scenario in which one exemplary variant of the above-described improved procedure is implemented. Fig. 15 is similar to Fig. 9, used to explain some additional problems encountered in the prior art. In this exemplary scenario of Fig. 15 it is assumed that the invention is only applied to one other function, here the system information acquisition function; however, it should be clear that it is also applicable to PWS-based scenarios or also to scenarios where both functions are operated in parallel. The Wake-up signal (WUS) is thus extended with notification information (illustrated in Fig. 15 with a box "noti."; here it would be the SI change notification), that additionally indicates whether or not the UE is to acquire updated system information. The functionality of the wake-up signal (part of the power-saving signal) need not change, thus resulting in that the corresponding On-Durations are not used for PDCCH monitoring because the wake-up signal indicates to the UE that it may further "sleep". More importantly however, because the suitable SI change notification is received using the power-saving signal, the UE does not need to additionally wake up during a paging occasion (at least once per modification period) to acquire this SI change notification. In the scenario of Fig. 15 this means that the two POs, one in each modification period, are not used by the UE to monitor for a message carrying the SI change notification on the PDCCH (the corresponding POs are illustrated as being crossed out in Fig. 15). This allows the UE to save power (in addition to what is saved due to the skipped On-Duration monitoring).

Although not illustrated in Fig. 15, the UE may follow the instruction of the SI update notification and acquire the updated system information at the next modification period in case the SI update notification indicates that system information is updated.

One possible implementation of the improved solution into the 3GPP standards is presented below. For instance, the corresponding section 5.2.2.2.2 "SI change indication and PWS notification" of TS 38.331 v 15.6.0 could be changed as follows

*"UEs in RRC_CONNECTED shall monitor for SI change indication in any paging occasion or in the power-saving signal at least once per modification period if the UE is provided with common search space on the active BWP to monitor paging, as specified in TS 38.213 [13], clause 13."*

*"ETWS or CMAS capable UEs in RRC_CONNECTED shall monitor for indication about PWS notification in any paging occasion or in the power-saving signal at least once every defaultPagingCycle if the UE is provided with common search space on the active BWP to monitor paging."*

This loosens the restriction for the UE by allowing the UE to also acquire the SI change indication and the PWS notification in the power-saving signal, such that there is no need for the UE to additionally monitor "any paging occasion" in those cases where the indication/notification can be obtained in the power-saving signal.

There are several possible variants on how to extend the power-saving signal to also include suitable notification information relating to other functions in the UE. It should be noted that 3GPP has not progressed so far as to define the actual content or structure of the wake-up signal. For instance, a new DCI format may be introduced (to be monitored by the UE) wherein the content for the UE is in the DCI and configurable by the base station using RRC signaling. The DCI may be transmitted in the UE-specific Search Space (UESS) or the Common Search Space (CSS) or in both. It may also be possible that the same DCI carries information for one or more UEs, e.g. bit field 0-3 for UE-A, bit field 4-6 for UE-B, bit field 7-9 for UE-C, in a same or similar fashion as currently defined for DCI format 2_3 (see 3GPP TS 38.212 v15.6.0). Thus, any suitable structure of the wake-up signal can be assumed.

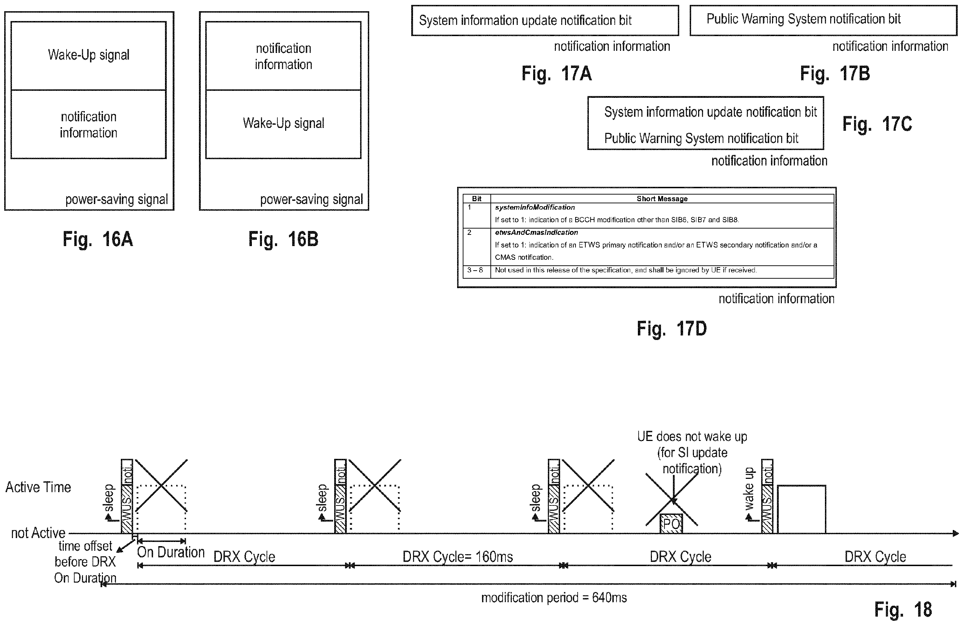

As apparent from **Fig. 16A and 16B****,** the power-saving signal may e.g. be structured to include the notification information in front or after the wake-up signal (i.e. at the beginning or at the end of the power-saving signal).

Moreover, there are several possible variants on how the notification information is implemented. For instance, at least one bit for each of the other functions is included in the notification information part of the power-saving signal. This allows to separately indicate per function whether or not the UE is to acquire the function-related information. **Fig. 17A****, B, C, and D** disclose different variants thereof. Fig. 17A and Fig. 17B illustrate how the notification information can respectively provide a notification bit for only one function, as exemplarily illustrated for one of the two example functions mentioned above, specifically a system information update notification bit and a public warning system notification bit. Fig. 17C illustrates how the notification information can provide bits for both of the two example functions. As one other possible exemplary implementation, the current 3GPP definitions (see 3GPP TS 38.331) in said respect can be reused, e.g. by using the systemInfoModification bit (systemInfoModification: If set to 1: indication of a BCCH modification other than SIB6, SIB7 and SIB8.) and the etwsAndCmaslndication bit (etwsAndCmaslndication: If set to 1: indication of an ETWS primary notification and/or an ETWS secondary notification and/or a CMAS notification).

Fig. 17D illustrates yet another variant that is based on the current 3GPP definitions. According to this solution, the Short Message, as currently defined for providing the SI change notification and PWS notification in a paging message (e.g. PDCCH format 1_0; P-RNTI), is reused to be carried by the power-saving signal.

Moreover, the extended power-saving signal can e.g. be transmitted at suitable recurring occasions, a time offset before the DRX On-Duration periods. This is illustrated in Fig. 15, and is in line with the current discussions in 3GPP. The value of the time offset can be configured e.g. by the base station, e.g. when configuring the UE for use of the power-saving signal (or wake-up signal). Thus, the UE is aware when it is to monitor the downlink control channel to be able to receive the power-saving signal. However, also another timing is equally possible.

As discussed above, the wake-up signal may also implicitly, e.g. by its presence or absence, indicate how the UE should behave with regard to whether or not monitor the subsequent DRX On-Duration(s). In such a variant of the improved procedure, the power-saving signal, if sent, would always comprise the notification information, but may or may not comprise the wake-up signal depending on whether the base station wants to instruct the UE to monitor (e.g. power-saving signal includes wake-up signal) or not to monitor (e.g. power-saving signal does not include wake-up signal) the subsequent DRX On-Duration(s).

Alternatively, the wake-up signal may be always present in the power-saving signal and may comprise one or more bits that indicate the UE how to behave with regard to whether or not it has to monitor the subsequent DRX On-Duration(s).

Further improvements of the above procedure relate to when to best use the extended power-saving signal with the notification information. Correspondingly, whether such an extended power-saving signal is used between the UE and the base station, to which it is connected, can be configurable. In other words, although the UE and base station might support the use of such an extended power-saving signal, it might only be actually in certain scenarios rather than at all times (as possibly assumed above). For instance, the inventors have realized that the additional overhead caused by transmitting the notification information, additionally, in the power-saving signal (as well as some additional UE power to process the notification information) can be further reduced by using the extended power-saving signal only at certain times.

For example, there is a trade-off between the additional overhead caused by the notification information against the possible power saving of the skipped PDCCH monitoring during the paging occasions (see e.g. Fig. 15). In general, a worst-case scenario is where the power-saving signal is transmitted ahead of every DRX On-Duration in combination with a very long modification period (and/or very long default paging cycle). In particular, in an exemplary scenario with a DRX configuration where the smallest DRX cycle of 10ms is used and with a SI configuration based the longest SI modification period of 40960 (2560msx16) is used, the notification information would be transmitted 4096 times (40960 / 10). On the other hand, the possible power saving gain is that the UE skips monitoring the PDCCH at one paging occasion, because of having received the notification information already with the power-saving signal. In such a case, the additional overhead and additional processing power might outweigh the possible power-saving gain.

This similarly applies to a PWS-based scenario where the maximum default paging cycle of 2560 ms is used by the UE and again the smallest DRX cycle of 10ms is assumed. In this case, the power-saving signal, with the notification information, is transmitted 256 times (2560ms / 10ms), which stands against the power saving gain of skipping the PDCCH monitoring at one paging occasion.

The above-described ratio between the possible disadvantages and the possible advantages caused by the extended power-saving signal can change with the (re-)configuration of the DRX cycles, the default paging cycle, the coefficient, the modification period, and with the number of times the power-saving signal is to be transmitted (e.g. for every On-Duration, or every third On-Duration when the power saving signal relates to three On-Durations).

According to one possible variant of the improved procedure, the extended power-saving signal is only used when the above-described ratio between the disadvantages and advantages is deemed to be favorable, e.g. when above a certain threshold. Put differently, only when there is good trade-off between the UE power saving vs the signaling overhead, the extended power saving signal is used. Otherwise, the normal wake-up signal (without the notification information), or no power-saving signal, respectively wake-up signal, can be used for instance.

One possible ratio to be exemplarily used for determining whether there is good trade-off uses the length of the DRX cycle vs the length of the function-related broadcast time period (e.g. the SI modification period or the default paging cycle). For instance, a ratio of DRX cycle length / function-related broadcast time period length can be calculated and compared against a threshold; if the ratio is above the threshold, it is considered to represent a scenario with a good trade-off and the extended power-saving signal is to be used; if the ratio is below the threshold, it is considered to represent a scenario with a bad trade-off where the extended power-saving signal is better not used.

**Fig. 18** exemplarily illustrates a first SI-function-based scenario where the DRX cycle length is about % of the SI modification period length, such that the above-defined ratio would be about ¼. In this case, the UE without the extended power-saving signal would have to wake up five times (four times to monitor for the Wake up signal and one time to monitor a paging occasion for the SI change notification). On the other hand, when using the extended power-saving signal, the UE would have to wake up four times, namely four times to monitor for the extended power-saving signal.

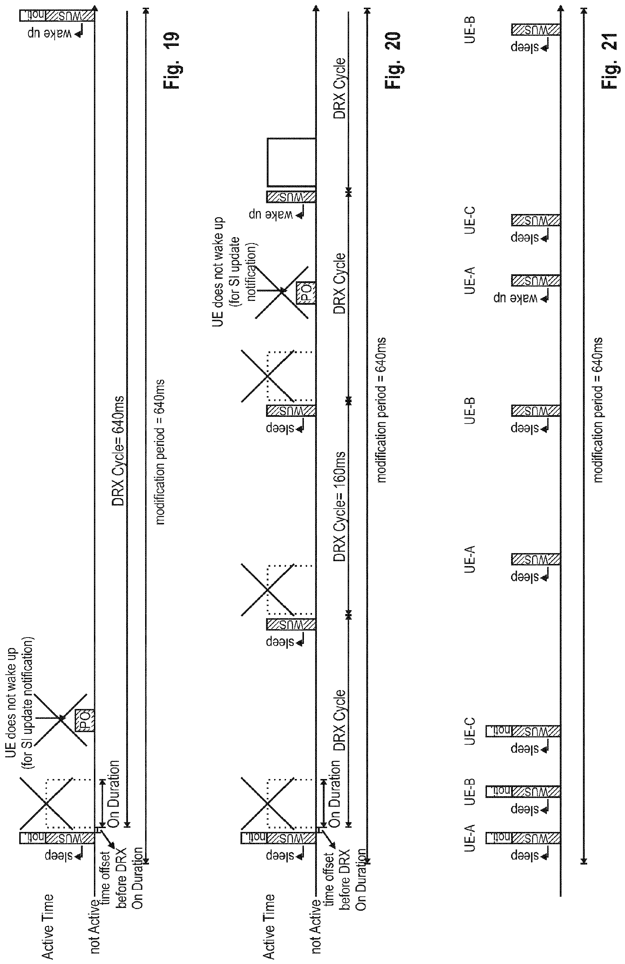

**Fig. 19** exemplarily illustrates another SI-function-based scenario where the DRX cycle length is the same as the SI modification period length, such that the above-defined ratio would 1. In this case, the UE without the extended power-saving signal would have to wake up two times (one time to monitor for the Wake up signal and one time to monitor a paging occasion for the SI change notification). On the other hand, when using the extended power-saving signal, the UE would have to wake up one time, namely one time to monitor for the extended power-saving signal that also includes the SI change notification.

The higher the ratio (e.g. close to 1), the better the trade-off; the lower the ratio (e.g. close to 0), the worse is the trade-off. One possible and exemplary threshold could be 0,75 such that the extended power-saving signal would be used in the scenario of Fig. 19 (because 1>0,75) but not in the scenario of Fig. 18 (because 0,25 < 0,75). Of course, other threshold values could be used as well, such as 0,5.

According to one possible and exemplary variant of the improved procedure, one exemplary procedure of how to decide on whether or not to use the extended power-saving signal is presented above, based on the trade-off between the possible advantages and disadvantages, exemplarily implemented based on comparing the ratio of DRX cycle length / broadcast time period length against a suitable threshold value.

The UE and the base station should best have the same understanding on whether or not and exactly when the extended power-saving signal or the normal power-saving signal (i.e. the wake-up signal only) is used. According to one exemplary option, the base station, responsible for transmitting the extended power-saving signal, is also responsible for deciding on whether or not to use the extended power-saving signal as mentioned above. The base station is responsible for configuring the DRX function as well as the other relevant functions for the UE (such as the SI acquisition function and the PWS function), such that the base station is aware of the lengths used for determining the above-mentioned ratio. After taking the decision based on the ratio and comparison with the threshold, the base station can appropriately instruct the UE that the extended power-saving signal will be used or not.

Instructing the UE can be e.g. combined with the UE configuration to be done for the wake-up signal. Configuring the UE for use of the wake-up signal might involve instructing the UE about the time offset (so as to determine how much time before the On-Duration the UE has to monitor for the wake-up signal or extended power-saving signal) or the number of DRX On-Durations each wake-up signal relates to, and other wake-up-signal-related parameters. Additionally, the base station could indicate to the UE whether the wake-up signal is extended with notification information or not.

Alternatively, rather than being explicitly instructed by the base station, the UE can determine by itself whether the current configuration presents a good trade-off or bad trade-off. In particular, the relevant parameters for distinguishing between the good and bad trade-off scenarios (e.g. the DRX cycle length, the default paging cycle length, the SI modification period length etc.) are known to the UE as well. The threshold to which the ratio is then compared can be known to the UE as well, e.g. when being defined by the 3GPP standards and thus being part of UE operation code or when being hardcoded into the UE in another manner or could be simply configured by the network operator or the base station. In this case, both the base station and the UE would apply the same rule to decide whether to use the extended power-saving signal or not, coming to the same conclusion and thus being synchronized as to whether a normal wake-up signal is used or the extended power-saving signal.

Still another possible solution is based on that the UE does not know in advance whether the normal wake-up signal is used or the extended power-saving signal. Rather, the base station can decide which signal is transmitted (e.g. based on the above considerations on good vs bad trade-off). The UE however monitors the downlink control channel for both formats of the signal (i.e. the extended wake-up signal and the normal wake-up signal) and thus is always able to successfully blind-decode one of the two signals. This obviates the need of configuring the UE in advance or of the UE applying the rule in advance to determine whether the signal to be received will be a normal wake-up signal or the extended power-saving signal.

Overall, these solutions have the advantage that the power-saving signal is tailored for every UE, e.g. UEs with a long DRX cycle monitoring for the extended power-saving signal while UEs with a short DRX cycle monitoring for only the normal wake-up signal. Moreover, the overall signaling overhead is reduced, because the notification information is not transmitted all times, but only when a corresponding power gain justifies it.

A further variant of the improved procedure also achieves reducing the signaling overhead caused by additionally transmitting the notification information even further. Rather than transmitting the notification information (the extended power-saving signal) every time with the wake-up signal, the extended power-saving signal is transmitted in some but not all instances, whereas the normal wake-up signal is transmitted in the remaining instances. For instance, the extended power-saving signal can be transmitted only at one (e.g. the first) (or a few) occasion of the function-related broadcast time period (e.g. the SI modification period or the default paging cycle), while at the remaining occasions (e.g. second, third etc.) of the function-related broadcast time period the normal wake-up signal is transmitted. Correspondingly, the notification information thus is broadcast at least once per function-related broadcast time period together with the wake-up signal, thus also achieving the advantage that the UE is allowed to skip monitoring the PDCCH at a paging occasion for acquiring the notification information.

The UE and base station could have the same understanding as to which signal(s) would carry the additional notification information and which would simply carry the wake-up signal; e.g. the first one, the second one etc. of the relevant broadcast time period. Therefore, the UE can know in advance the type of signal (normal wake-up signal vs. extended power-saving signal) and thus properly monitor the downlink control channel based on the appropriate format. On the other hand, blind decoding always for two different formats is also possible, although it increases processing at the UE side and thus wastes UE power.

This improved variant (see above explanation with regard to Fig. 20) can be applied separately from or together with the improvements presented above (in connection with Fig. 18, 19) about determining whether or not to use the extended power-saving signal at all. For instance, the UE may be configured for use of the extended power-saving signal independent from the particular lengths of the DRX cycle and broadcast time period length, because the negative impact of the increased signaling overhead may be significantly limited due to limiting the transmittal of the notification information to just one (or a few) of the wake-up signal transmitting occasions. On the other hand, the number of times the notification information would be transmitted can also be used as a parameter influencing whether or not the extended power-saving signal is used at all between the UE and the base station.

**Fig. 20** illustrates an exemplary SI-acquisition function related scenario in which only the first signal is an extended power-saving signal with the notification information (the SI change notification, see "noti." in figure), while the remaining signals are the normal wake-up signal (without the notification information).

**Fig. 21** illustrates another scenario, taking into account several UEs (UE-A, UE-B, UE-C). It is exemplarily assumed that the same SI modification period is configured for these three UEs, here e.g. 640ms. On the other hand, the three UEs have different DRX cycles. As apparent from Fig. 21, the respectively first signal is an extended power-saving signal (including the notification information), whereas the other signals are normal wake-up signals. Therefore, in this exemplary scenario, UE-A and UE-B are provided with three wake-up signals, respectively the first one being extended with the notification information. UE-C, having a larger DRX cycle, is provided with two wake-up signals, the first one being extended with the notification information.

An exemplary assumption is that the UE is in RRC_CONNECTED mode. The invention can be also used for UEs that are in RRC_IDLE or RRC_INACTIVE mode. However, the Idle or Inactive UEs need to monitor paging occasions in any case so as to be reachable for the network (e.g. in case DL data is available to be forwarded to the UE). Thus, the advantage that the UE can skip monitoring the paging occasion may thus not always be achieved for Idle or Inactive UEs. Moreover, 3GPP might decide that the power-saving signal (e.g. wake-up signal) is finally not to be used in connection with Idle or Inactive UEs. In those cases, for UEs in RRC_IDLE and RRC_INACTIVE, the notification information can be acquired by the UE at those paging occasions anyway (assuming that the base station transmits the notification information at those paging occasions), such that the additional power used to acquire the notification information via the power-saving signal (even if transmitted) might not be worthwhile.

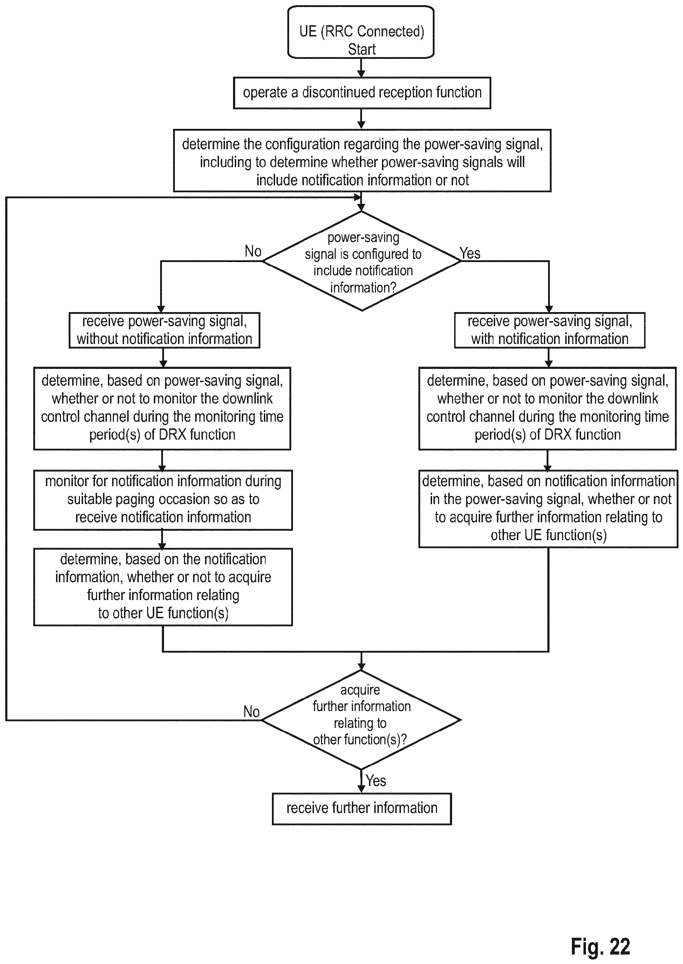

A more detailed implementation of one exemplary variant of the above-discussed improved method will be described with regard to **Fig. 22****,** which illustrates various additional steps for the UE behavior compared to the solution explained in connection with Fig. 13. Specifically, this solution assumes that the UE determines whether and how the extended power-saving signal will be used. This could be implemented according to one of the options explained above e.g. by receiving corresponding configuration information from the base station (e.g. responsible for deciding on whether to use the extended power-saving signal) or by determining this autonomously based on a certain rule (the same rule as used by the base station).

The UE behavior is different depending on whether the extended power-saving signal is used or not. The right branch after the distinction of whether the power-saving signal is configured to include notification information includes steps of receiving the extended power-saving signal with the notification information. The power-saving signal (e.g. the wake-up signal within the power-saving signal) can be used by the UE to determine whether or not the UE should monitor the PDCCH during the subsequent DRX On-Duration(s). Moreover, the notification information within the power-saving signal can be used by the UE to determine whether or not the UE needs to acquire further information (e.g. updated system information or a public warning message) relating to another function operated by the UE (e.g. the SI acquisition function or the PWS function). Depending on the outcome, the UE either acquires this further information or not.

The left branch after the distinction of whether the power-saving signal is configured to include notification information includes steps that do not make use of the extended power-saving signal, thus not achieving the additional advantage of skipping the need to monitor for the notification information during a suitable paging occasion. This becomes apparent from comparing the left and right branches and particularly the additional step in the left branch about monitoring for notification information during suitable paging occasion so as to receive the notification information.

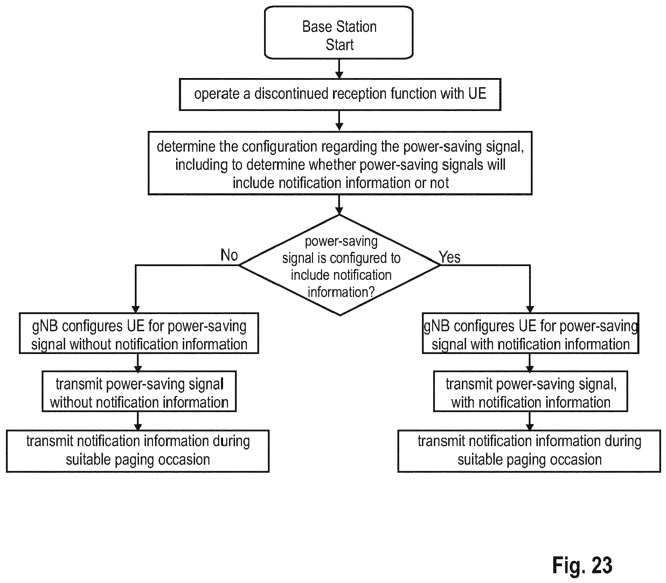

In congruence with the UE behavior explained above in connection with Fig. 22, a more detailed implementation of one exemplary variant of the above-discussed improved method will be described with regard to **Fig. 23****,** which illustrates various additional steps for the base station behavior compared to the solution explained in connection with Fig. 14. As apparent therefrom, it is exemplarily assumed that the base station configures the UE for using the power-saving signal with or without the additional notification information, and thus e.g. transmits suitable configuration information to the UE (e.g. when configuring the use of the wake-up signal). Further, in line with the configuration, the base station either transmits the power-saving signal with or without the notification information. In this particular exemplary scenario it is assumed that the base station in any case transmits the notification information (not only with the power-saving signal) but also in the paging occasions (e.g. so as to convey the notification information to other UEs, such as those that are in Idle mode, those that are not configured with a wake-up signal etc.).

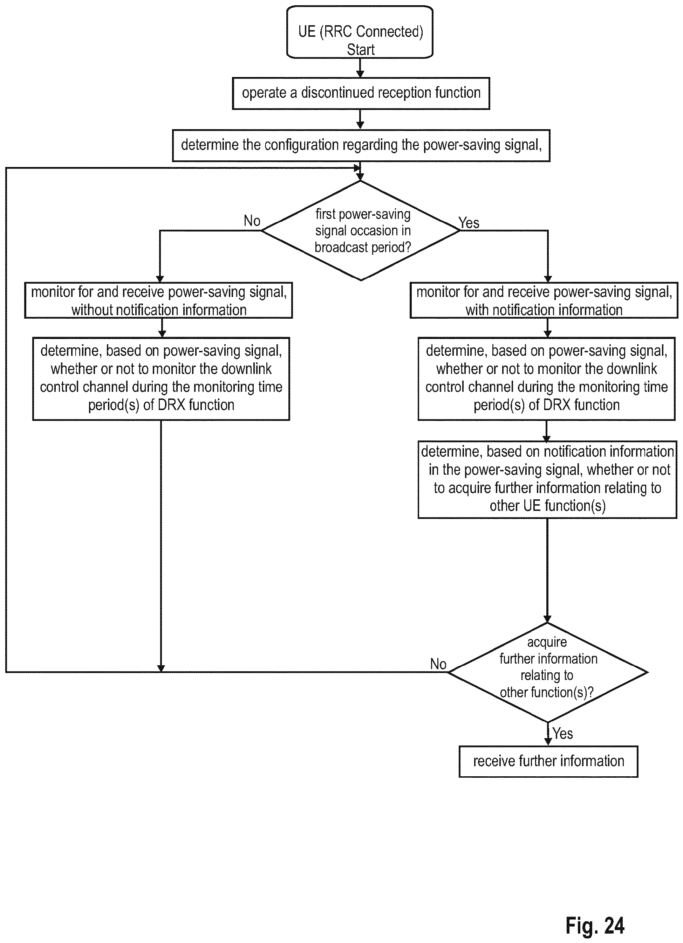

A more detailed implementation of one exemplary variant of the above-discussed improved method will be described with regard to **Fig. 24****,** which illustrates the corresponding UE behavior. In particular, it is exemplarily assumed that the improved method is such that only the first power-saving signal transmission occasion within the function-related broadcast time period (e.g. the SI modification period or the default paging cycle) is used for carrying the notification information to the UE, whereas the remaining power-saving signal transmission occasion(s) within the function-related broadcast time period are used to simply carry the wake-up signal (without the notification information). Correspondingly, the sequence diagram of Fig. 24 illustrates a step of determining the configuration regarding the power-saving signal, which may among other things involve that the UE determines that only the respective first power-saving signal transmission occasion is to be used to acquire the notification information (e.g. based on configuration information from the base station).

Accordingly, during further operation, the UE determines whether the current occasion is the first one or not, and correspondingly monitors the PDCCH for reception of either the normal wake-up signal (i.e. power saving signal without the notification information, when not first occasion, left no-branch in Fig. 24) or the extended power-saving signal (i.e. wake-up signal with notification information, when first occasion, right yes-branch in Fig. 24). Similarly to what was explained before, the UE in any case receives the wake-up signal part, and can, on that basis, determine whether or not to monitor the downlink control channel during the subsequent DRX On-Duration(s). According to the solution of Fig. 24, when receiving the notification information within the power-saving signal, the UE may proceed to determine whether or not the notification information indicates that further information of a related function (such as updated system information or a public warning message) needs to be acquired by the UE. As explained already before, the UE then follows the indication in the notification information and acquires or not the further information.

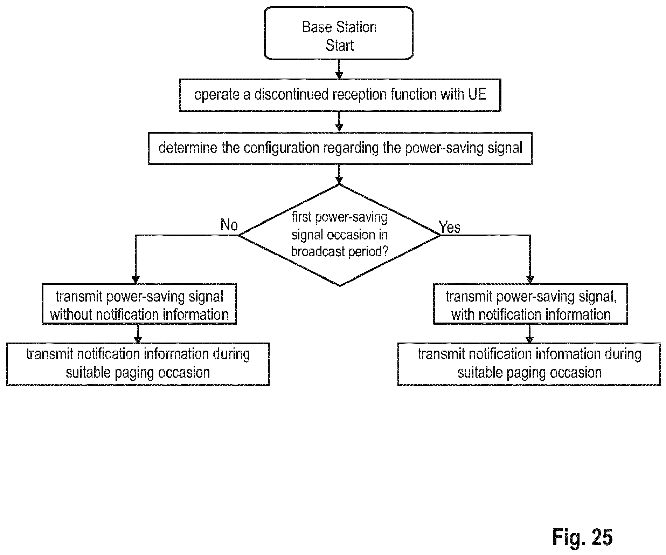

In congruence with the UE behavior explained above in connection with Fig. 24, a more detailed implementation of one exemplary variant of the above-discussed improved method will be described with regard to **Fig. 25****,** which illustrates the corresponding base station behavior. Correspondingly, the base station can be responsible to determine when and how the power-saving signal is transmitted, e.g. transmitting the extended power-saving signal only in the first power-saving signal occasion of the broadcast time period, while transmitting the normal wake-up signal (without the notification information) in the remaining power-saving signal occasions. The base station transmits the wake-up signal and the extended power-saving signal according to this determined configuration, as apparent from Fig. 25. Furthermore, it is again exemplarily assumed that the base station transmits additionally the notification information during suitable paging occasions.

### Second Embodiment

In the following, another second solution will be described for solving the problems identified by the inventors as explained before in connection with Fig. 9. As for the first solution above, the second solution also facilitates providing power saving possibilities for the UE in connection with other functions (e.g. SI acquisition function, PWS function) and their requirements for monitoring the downlink control channel. The same assumptions as already made for the first embodiment can also be applied for this second solution.

The second solution is different from the first solution as it is not based on extending the wake-up signal with the notification information so as to avoid the need to monitor for the notification information at other times. Correspondingly, the second solution can be used independent from the first solution (and the variants) or can be used to supplement some of the variants of the first solution, particularly when the extended power-saving signal (with the notification information) is not used in a broadcast time period (e.g. when there is not good trade-off).

In accordance therewith, it is assumed that the UE is configured for using the wake-up signal as introduced above, so as to allow the base station to notify the UE to or not to monitor one or more of DRX On-Duration periods subsequent to the reception of the wake-up signal.

It is further assumed that the notification information relating to the other functions at the UE (such as the SI acquisition function or the PWS function) are provided by the base station to the UE by means of paging messages broadcast at suitable recurring paging occasions. Accordingly, the UE knows about the regularly occurring paging occasions, and the UE, at least once per broadcast time period, shall try to monitor for the notification information in any of the paging occasions. This ensures that the UE, at least once per broadcast time period, checks whether any important information (e.g. updated system information, public warning message) is to be acquired further.

At present, which particular paging occasion is selected by the UE for monitoring for the notification information to fulfil the requirement is left for the UE implementation, e.g. to the UE or chip manufacturer. However, the second solution is based on the idea of using, if needed, the last paging occasion per broadcast time period for monitoring the downlink control channel to receive the notification information of one or more other function operated by the UE.

During a particular broadcast time period, the UE wakes up to monitor for and receive the wake-up signal, and possibly the subsequent DRX On-Duration (if instructed so by the wake-up signal). Thus, the UE already wakes up a certain number of times per broadcast time period to monitor the downlink control channel. The paging occasions are defined independently from the DRX cycles, thus independently from those monitoring times. Nonetheless, one or more of the paging occasions may overlap those monitoring times, such that the UE, which is anyway awake to monitor the downlink control channel for the Wake-up signal or the downlink control information (during a DRX On-Duration), can also take the opportunity to monitor for a paging message at this overlapping paging occasion. Thus, the UE can acquire during this overlapping paging occasion the notification information in the corresponding paging message. In such cases, there is no need to further wake-up for another paging occasion of the same broadcast time period, because the notification information was already received at a previous paging occasion.

On the other hand, in case no such overlapping paging occasion exists in a broadcast time period, the notification information is not available, i.e. was not already received for this broadcast time period, the UE may have to wake-up at the last paging occasion of the broadcast time period to be able to acquire the paging message with the notification information. By waiting up to the last paging occasion, there is a higher chance that any earlier paging occasion might overlap with other PDCCH monitoring times for receiving the wake-up signal or for the DRX On-Duration.

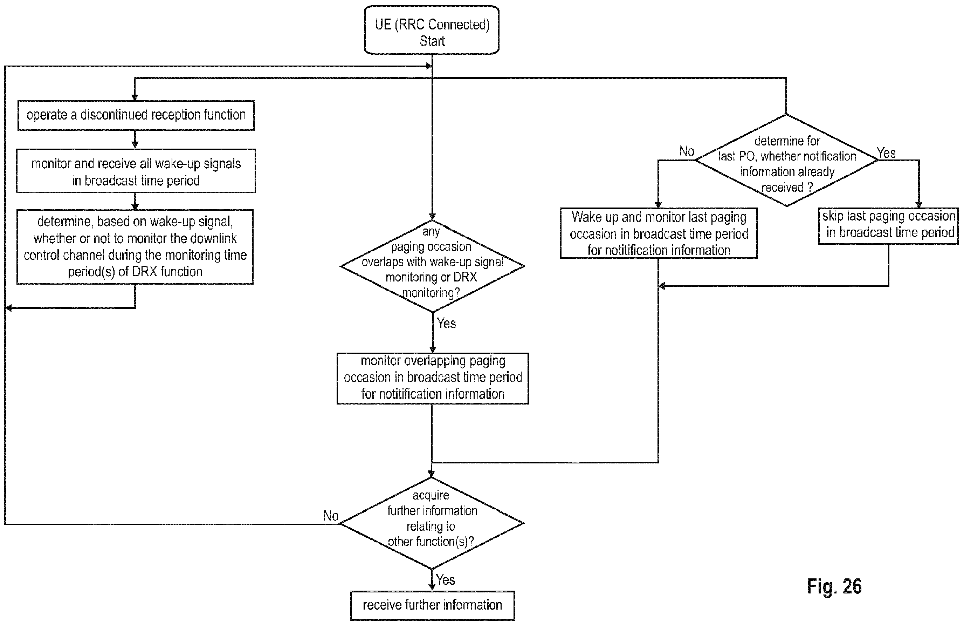

This UE behavior is exemplary illustrated in **Fig. 26****,** which is a sequence diagram of the UE behavior for an exemplary and simplified implementation based on the above-discussed underlying principles. As apparent therefrom, the normal UE operation regarding DRX and wake-up is illustrated in the left branch of Fig. 26. The principles underlying the second solution are reflected in the middle and right branches of Fig. 26, which are exemplarily illustrated separate from one another. As apparent, the UE may decide for each wake-up time (be it for receiving the wake-up signal or be it for the DRX On-Duration) whether a paging occasion is currently overlapping this wake-up time. If there is an overlapping paging occasion, the UE takes the opportunity to also monitor for the paging message that may include the notification information during that overlapping paging occasion.

Moreover, the UE when reaching the last paging occasion in the respective broadcast time periods checks whether the notification information was already received before (e.g. in the overlapping paging occasion). If it was already received, there is no need to wake up at the last paging occasion. On the other hand, if the notification information is not available, then the UE wakes up and monitors the last paging occasion of the present broadcast time period to receive the notification information.

Therefore, the notification information, if transmitted at all, can be obtained by the UE, and on that basis, the UE can derive whether further information relating to another function needs to be acquired as well.

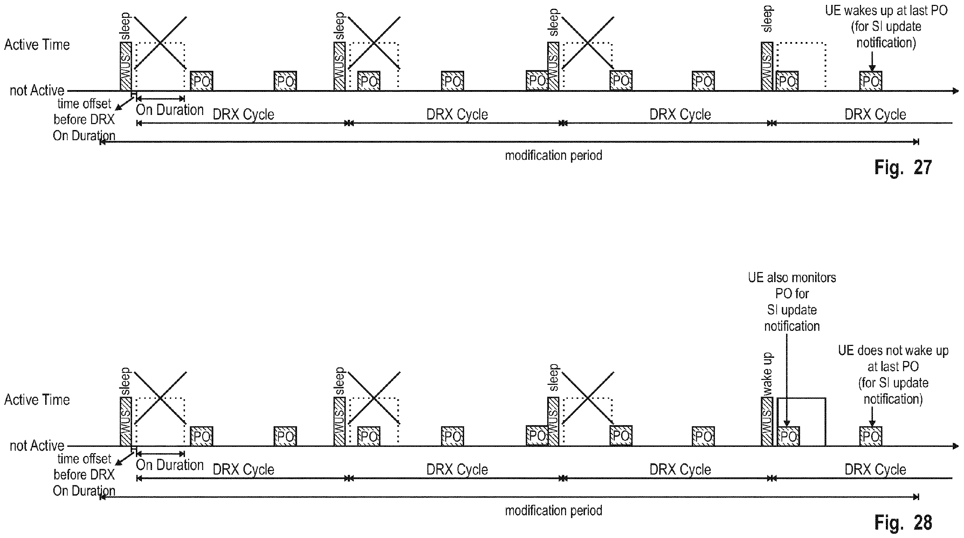

**Fig. 27** and **Fig. 28** illustrate an exemplary scenario using the above-described second solution. Although the exemplary scenario of Fig. 27, 28 assumes that the other function is the SI acquisition function, the same explanations apply to scenarios where the other function is the PWS function. In such a PWS-related scenario, that the broadcast time period would not be the SI modification period but the default paging cycle, and the notification information would not be the SI change indication but the PWS notification.

As apparent from Fig. 27, it is assumed that none of the regularly occurring paging occasions overlaps with any of the Wake-up signal acquisition periods nor with any other active time of the UE. Therefore, the UE uses the last paging occasion of the SI modification period to acquire the paging message and the notification information.

As apparent from Fig. 28, it is assumed that one of the regularly occurring paging occasions indeed overlaps with a monitoring time period of the UE (in this case, an DRX On-Duration period), such that the UE can acquire the paging message and notification information (if any) during the corresponding overlapping paging occasion because the UE is already awake in any case. Compared to the case of Fig. 27, the UE does not need to wake up again at the last paging occasion.

### Further Aspects

According to a first aspect, a user equipment, UE, is provided comprising:
- processing circuitry, which in operation, operates a discontinued reception function that involves monitoring of a downlink control channel for downlink control information intended to the UE during recurring monitoring time periods,
- a receiver, which in operation, receives a power-saving signal,
- the processing circuitry, when in operation, determines based on the power-saving signal whether or not to monitor the downlink control channel during one or more of the monitoring time periods of the discontinued reception function subsequent to the reception of the power-saving signal,
- wherein the power-saving signal includes notification information on whether or not the UE is to acquire further information relating to one or more other functions operated by the UE.

According to a second aspect provided in addition to the first aspect, the processing circuitry, when in operation, determines whether or not to acquire the further information based on the notification information included in the received power-saving signal. In case it is determined to acquire the further information, the processing circuitry and the receiver, when in operation, monitor the downlink control channel for the further information during a broadcast time period of the one or more other functions and acquire the further information.

According to a third aspect provided in addition to the first or second aspect, the notification information includes at least one bit for each of the one or more other functions so as to separately indicate whether or not the UE is to acquire the further information of the respective other function.

According to a fourth aspect provided in addition to any of first to third aspects, the one or more other functions are one or more of:
- a system information update function, wherein the further information is updated system information, and the receiver, when in operation, acquires the further information during a system information modification time period subsequent to a system information modification time period during which the power-saving signal is received,
- a public warning system function, wherein the further information is public warning information, and the receiver, when in operation, acquires the further information during a next possible time period for receiving the public warning information after receiving the power-saving signal.

According to a fifth aspect, provided in addition to one of the first to fourth aspects, the processing circuitry, when in operation, determines whether to receive the power-saving signal with or without the notification information based on:
- the length of the monitoring time period of the discontinued reception function and the length of a broadcast time period of the one or more other functions, optionally based on comparing the ratio between the length of the monitoring time period of the discontinued reception function and the length of the broadcast time period of the one or more other function with a threshold, optionally wherein the threshold is configured by a base station to which the UE is connected, or
- based on configuration information received before from a base station to which the UE is connected, or
wherein the processing circuitry monitors for both formats of the power-saving signal, one format with the notification information and the other format without the notification information, to acquire the power-saving signal.

According to a sixth aspect, provided in addition to one of the first to fifth aspects, the processing circuitry, when in operation, determines whether the power-saving signal is the first one during a broadcast time period of the one or more other functions, the broadcast time period being a time period during which the UE is to monitor at least once for receiving the notification information, and wherein the processing circuitry, when in operation, determines that the power-saving signal includes the notification information in case it is the first one in the broadcast time period of the one or more other functions. In an optional solution, in case the power-saving signal is not the first one in the broadcast time period of the one or more other functions, the processing circuitry, when in operation, determines that this power-saving signal, not being the first one, does not include the notification information.

According to a seventh aspect provided in addition to any of first to the sixth aspects, the receiver, when in operation, monitors for the reception of the power-saving signal and receives the power-saving signal at a power-saving signal reception occasion that is a time offset before the monitoring time period of the discontinued reception function, optionally wherein the time offset is configured by a base station to which the UE is connected. The determining of whether or not to monitor the downlink control channel during one or more of the monitoring time periods based on the power-saving signal is performed by determining the presence/absence of a wake-up signal in the power-saving signal at the power-saving signal reception occasion or by determining the value of one or more bits of a wake-up signal in the received power-saving signal.

According to an eighth aspect provided in addition to one of the first to seventh aspects, recurring broadcast time periods are defined for the one or more other functions during which the downlink control channel is to be monitored by the UE at least once so as to acquire the notification information, wherein the processing circuitry, when receiving the notification information in the power-saving signal determines, to not further monitor the downlink control channel to acquire other notification information during the broadcast time period in which the power-saving signal is received. In an optional implementation, for each of the recurring broadcast time periods, one or more paging occasions are defined at which the notification information can be received, wherein the UE is to monitor the downlink control channel at least for one of the one or more paging occasions so as to acquire the notification information when not receiving the notification information in the power-saving signal.

According to a ninth aspect provided in addition to one of the first to eighth aspects, when in one of recurring broadcast time periods in which the notification information will not be received in the power-saving signal, and when the notification information has not been received in a previous than the last paging occasion in the one broadcast time period, the processing circuitry monitors the downlink control channel at the last paging occasion for receiving the notification information in the one broadcast time period. Further optionally, when in one of recurring broadcast time periods in which the notification information will not be received in the power-saving signal, and when one paging occasion overlaps with one of power-saving signal reception occasions at which the UE monitors the downlink control channel for the reception of the power-saving signal or with a monitoring time period at which the UE monitors the downlink control channel for the reception of downlink control information, the processing circuitry monitors the downlink control channel at the overlapping paging occasion for receiving the notification information in the one broadcast time period,

According to a tenth aspect, a base station is provided comprising:
- processing circuitry, which in operation, operates a discontinued reception function with a user equipment, UE, connected to the base station, wherein the discontinued reception function involves transmitting downlink control information over a downlink control channel to the UE during recurring monitoring time periods,
- a transmitter, which in operation, transmits a power-saving signal to the UE, the power-saving signal indicating to the UE whether or not to monitor the downlink control channel during one or more of the monitoring time periods of the discontinued reception function subsequent to the reception of the power-saving signal,
- wherein the power-saving signal includes notification information on whether or not the UE is to acquire further information relating to one or more other functions operated by the UE and the base station.

According to an eleventh aspect, provided in addition to the tenth aspect, when the notification indicates that further information is to be acquired, the transmitter, when in operation, transmits the further information during a broadcast time period of the one or more other functions, optionally wherein the one or more other functions are one or more of:
- a system information update function, wherein the further information is updated system information, and the transmitter, when in operation, transmits the further information during a system information modification time period subsequent to a system information modification time period during which the power-saving signal is transmitted,
- a public warning system function, wherein the further information is public warning information, and the receiver, when in operation, transmits the further information during a next possible time period for transmitting the public warning information after transmitting the power-saving signal.

According to a twelfth aspect, provided in addition to the tenth or eleventh aspects, the processing circuitry, when in operation, determines whether to transmit the power-saving signal with or without the notification information based on:
- the length of the monitoring time period of the discontinued reception function and the length of a broadcast time period of the one or more other functions, optionally based on comparing the ratio between the length of the monitoring time period of the discontinued reception function and the length of the broadcast time period of the one or more other function with a threshold,
optionally wherein the base station configures UE as to whether the power-saving signal is to be transmitted with or without the notification information by the transmitter transmitting configuration information to the UE.

According to a thirteenth aspect, provided in addition to any of the tenth to twelfths aspects, the processing circuitry, when in operation, determines whether the power-saving signal is the first one during a broadcast time period of the one or more other functions, the broadcast time period being a time period during which the UE is to monitor at least once for receiving the notification information, and wherein the processing circuitry, when in operation, determines that the power-saving signal includes the notification information in case it is the first one in the broadcast time period of the one or more other functions. Optionally, in case the power-saving signal is not the first one in the broadcast time period of the one or more other functions, the processing circuitry, when in operation, determines that this power-saving signal, not being the first one, does not include the notification information.

According to a fourteenth aspect, provided in addition to any of the tenth to thirteenth aspects, the transmitter, when in operation, transmits the power-saving signal at a power-saving signal transmitting occasion that is a time offset before the monitoring time period of the discontinued reception function, optionally wherein the time offset is configured by the base station.

According to a fifteenth aspect, a method is provided comprising the following steps performed by a user equipment, UE:
- operating a discontinued reception function that involves monitoring of a downlink control channel for downlink control information intended to the UE during recurring monitoring time periods,
- receiving a power-saving signal,
- determining based on the power-saving signal whether or not to monitor the downlink control channel during one or more of the monitoring time periods of the discontinued reception function subsequent to the reception of the power-saving signal,
wherein the power-saving signal includes notification information on whether or not the UE is to acquire further information relating to one or more other functions operated by the UE.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSls as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
processing circuitry, which in operation, operates a discontinued reception function that involves monitoring of a downlink control channel for downlink control information intended to the UE during recurring monitoring time periods,
a receiver, which in operation, receives a power-saving signal,
the processing circuitry, when in operation, determines based on the power-saving signal whether or not to monitor the downlink control channel during one or more of the monitoring time periods of the discontinued reception function subsequent to the reception of the power-saving signal,
wherein the power-saving signal includes notification information on whether or not the UE is to acquire further information relating to one or more other functions operated by the UE.

2. The user equipment according to claim 1, the processing circuitry, when in operation, determines whether or not to acquire the further information based on the notification information included in the received power-saving signal,
in case it is determined to acquire the further information, the processing circuitry and the receiver, when in operation, monitor the downlink control channel for the further information during a broadcast time period of the one or more other functions and acquire the further information.

3. The user equipment according to any of claims 1 to 2, wherein the notification information includes at least one bit for each of the one or more other functions so as to separately indicate whether or not the UE is to acquire the further information of the respective other function.

4. The user equipment according to any of claims 1 to 3, wherein the one or more other functions are one or more of:
• a system information update function, wherein the further information is updated system information, and the receiver, when in operation, acquires the further information during a system information modification time period subsequent to a system information modification time period during which the power-saving signal is received,
• a public warning system function, wherein the further information is public warning information, and the receiver, when in operation, acquires the further information during a next possible time period for receiving the public warning information after receiving the power-saving signal.

5. The user equipment according to any of claims 1 to 4, wherein the processing circuitry, when in operation, determines whether to receive the power-saving signal with or without the notification information based on:
∘ the length of the monitoring time period of the discontinued reception function and the length of a broadcast time period of the one or more other functions, optionally based on comparing the ratio between the length of the monitoring time period of the discontinued reception function and the length of the broadcast time period of the one or more other function with a threshold, optionally wherein the threshold is configured by a base station to which the UE is connected, or
∘ based on configuration information received before from a base station to which the UE is connected, or
wherein the processing circuitry monitors for both formats of the power-saving signal, one format with the notification information and the other format without the notification information, to acquire the power-saving signal.

6. The user equipment according to any of claims 1 to 5, wherein the processing circuitry, when in operation, determines whether the power-saving signal is the first one during a broadcast time period of the one or more other functions, the broadcast time period being a time period during which the UE is to monitor at least once for receiving the notification information, and wherein the processing circuitry, when in operation, determines that the power-saving signal includes the notification information in case it is the first one in the broadcast time period of the one or more other functions,
optionally wherein in case the power-saving signal is not the first one in the broadcast time period of the one or more other functions, the processing circuitry, when in operation, determines that this power-saving signal, not being the first one, does not include the notification information.

7. The user equipment according to any of claims 1 to 6, wherein the receiver, when in operation, monitors for the reception of the power-saving signal and receives the power-saving signal at a power-saving signal reception occasion that is a time offset before the monitoring time period of the discontinued reception function, optionally wherein the time offset is configured by a base station to which the UE is connected,
wherein the determining of whether or not to monitor the downlink control channel during one or more of the monitoring time periods based on the power-saving signal is performed by determining the presence/absence of a wake-up signal in the power-saving signal at the power-saving signal reception occasion or by determining the value of one or more bits of a wake-up signal in the received power-saving signal.

8. The user equipment according to any of claims 1 to 7, wherein recurring broadcast time periods are defined for the one or more other functions during which the downlink control channel is to be monitored by the UE at least once so as to acquire the notification information, wherein the processing circuitry, when receiving the notification information in the power-saving signal determines, to not further monitor the downlink control channel to acquire other notification information during the broadcast time period in which the power-saving signal is received,
optionally wherein, for each of the recurring broadcast time periods, one or more paging occasions are defined at which the notification information can be received, wherein the UE is to monitor the downlink control channel at least for one of the one or more paging occasions so as to acquire the notification information when not receiving the notification information in the power-saving signal.

9. The user equipment according to any of claims 1 to 8,
wherein when in one of recurring broadcast time periods in which the notification information will not be received in the power-saving signal, and when the notification information has not been received in a previous than the last paging occasion in the one broadcast time period, the processing circuitry monitors the downlink control channel at the last paging occasion for receiving the notification information in the one broadcast time period, and
optionally wherein when in one of recurring broadcast time periods in which the notification information will not be received in the power-saving signal, and when one paging occasion overlaps with one of power-saving signal reception occasions at which the UE monitors the downlink control channel for the reception of the power-saving signal or with a monitoring time period at which the UE monitors the downlink control channel for the reception of downlink control information, the processing circuitry monitors the downlink control channel at the overlapping paging occasion for receiving the notification information in the one broadcast time period,

10. A base station, comprising:
processing circuitry, which in operation, operates a discontinued reception function with a user equipment, UE, connected to the base station, wherein the discontinued reception function involves transmitting downlink control information over a downlink control channel to the UE during recurring monitoring time periods,
a transmitter, which in operation, transmits a power-saving signal to the UE, the power-saving signal indicating to the UE whether or not to monitor the downlink control channel during one or more of the monitoring time periods of the discontinued reception function subsequent to the reception of the power-saving signal,
wherein the power-saving signal includes notification information on whether or not the UE is to acquire further information relating to one or more other functions operated by the UE and the base station.

11. The base station according to claim 10, wherein when the notification indicates that further information is to be acquired, the transmitter, when in operation, transmits the further information during a broadcast time period of the one or more other functions,
optionally wherein the one or more other functions are one or more of:
• a system information update function, wherein the further information is updated system information, and the transmitter, when in operation, transmits the further information during a system information modification time period subsequent to a system information modification time period during which the power-saving signal is transmitted,
• a public warning system function, wherein the further information is public warning information, and the receiver, when in operation, transmits the further information during a next possible time period for transmitting the public warning information after transmitting the power-saving signal.

12. The base station according to any of claims 10 or 11, wherein the processing circuitry, when in operation, determines whether to transmit the power-saving signal with or without the notification information based on:
∘ the length of the monitoring time period of the discontinued reception function and the length of a broadcast time period of the one or more other functions, optionally based on comparing the ratio between the length of the monitoring time period of the discontinued reception function and the length of the broadcast time period of the one or more other function with a threshold,
optionally wherein the base station configures UE as to whether the power-saving signal is to be transmitted with or without the notification information by the transmitter transmitting configuration information to the UE.

13. The base station according to any of claims 10 to 12, wherein the processing circuitry, when in operation, determines whether the power-saving signal is the first one during a broadcast time period of the one or more other functions, the broadcast time period being a time period during which the UE is to monitor at least once for receiving the notification information, and wherein the processing circuitry, when in operation, determines that the power-saving signal includes the notification information in case it is the first one in the broadcast time period of the one or more other functions,
optionally wherein in case the power-saving signal is not the first one in the broadcast time period of the one or more other functions, the processing circuitry, when in operation, determines that this power-saving signal, not being the first one, does not include the notification information.

14. The base station according to any of claims 10 to 13, wherein the transmitter, when in operation, transmits the power-saving signal at a power-saving signal transmitting occasion that is a time offset before the monitoring time period of the discontinued reception function, optionally wherein the time offset is configured by the base station.

15. A method comprising the following steps performed by a user equipment, UE:
operating a discontinued reception function that involves monitoring of a downlink control channel for downlink control information intended to the UE during recurring monitoring time periods,
receiving a power-saving signal,
determining based on the power-saving signal whether or not to monitor the downlink control channel during one or more of the monitoring time periods of the discontinued reception function subsequent to the reception of the power-saving signal,
wherein the power-saving signal includes notification information on whether or not the UE is to acquire further information relating to one or more other functions operated by the UE.
